(19)

Europäisches
Patentamt
European
Patent Office
Office européen
des brevets

(11) **EP 4 571 584 A1**

(12) **EUROPEAN PATENT APPLICATION**

(43) Date of publication:
**18.06.2025 Bulletin 2025/25**

(21) Application number: **23217050.6**

(22) Date of filing: **15.12.2023**

(51) International Patent Classification (IPC):
***G06N 3/063*** (2023.01)

(52) Cooperative Patent Classification (CPC):
**G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **JIVANESCU, Mihaela Andreea
  Bierbeek (BE)**
• **YUDAYEV, Maxim
  Antwerp (BE)**
• **KONG, Fanchen
  Taiyuan City (CN)**

(74) Representative: **Nokia EPO representatives
Nokia Technologies Oy
Karakaari 7
02610 Espoo (FI)**

(54) **DYNAMIC ENERGY SAVING CONTROLLER FOR MACHINE LEARNING HARDWARE ACCELERATORS**

(57)     An apparatus includes means for: determining a zero status bit of a first element that indicates whether the first element is zero; determining a zero status bit of a second element that indicates whether the second element is zero; determining a combined status bit corresponding to an index of the first element and an index of the second element, wherein the combined status bit indicates whether a product of a next first element and a next second element is non-zero; determining a pointer that points to a memory address of a next set of elements comprising the next first element and the next second element, based on the combined status bit; retrieving the next set of elements from a location in the at least one memory given by the memory address; and performing a computation to determine the product of the next first element and the next second element.

FIG. 15

**Description**

TECHNICAL FIELD

The examples and non-limiting example embodiments relate generally to communications and, more particularly, to a dynamic energy saving controller for machine learning hardware accelerators.

BACKGROUND

It is known to implement communication networks with various hardware components.

SUMMARY

In accordance with an aspect, an apparatus includes means for determining a zero status bit of a first element that indicates whether the first element is zero; means for determining a zero status bit of a second element that indicates whether the second element is zero; means for determining at least one combined status bit corresponding to an index of the first element and an index of the second element, wherein the at least one combined status bit indicates whether a product of a next first element and a next second element is non-zero; means for determining at least one pointer that points to a memory address of a next set of elements comprising the next first element and the next second element, based on the at least one combined status bit; means for retrieving the next set of elements from a location in the at least one memory given by the memory address; and means for performing a computation to determine the product of the next first element and the next second element.

In accordance with an aspect, an apparatus includes means for receiving as input a sequential bitstream; means for determining, using a cache, a distribution of zero-inputs from the sequential bitstream; means for determining a zero-input from the distribution of zero-inputs; and means for determining whether to skip reading the zero-input, or to generate an on-chip zero as a zero-gating zero to replace the zero-input.

In accordance with an aspect, an apparatus includes means for determining to skip multiply and accumulate computations and memory accesses for combinations of operands that produce zero when multiplied; means for maintaining an accumulation value comprising an accumulation of products; means for maintaining a positive queue corresponding to products with positive results, and a positive pointer that points to the products with positive results; means for maintaining a negative queue corresponding to products with negative results, and a negative pointer that points to the products with negative results; means for determining to stop multiply and accumulate computations corresponding to an output once the accumulation value is greater than or equal to a first threshold, remaining products to compute being positive, and the negative pointer pointing to null; means for determining to process products from the negative queue to decrease the accumulation value, in response to the accumulation value being greater than or equal to the first threshold and the negative pointer not pointing to null; means for determining to stop multiply and accumulate computations corresponding to the output once the accumulation value is less than or equal to a second threshold, remaining products to compute being negative, and the positive pointer pointing to null; and means for determining to process products from the positive queue to increase the accumulation value, in response to the accumulation value being less than or equal to the second threshold and the positive pointer not pointing to null.

BRIEF DESCRIPTION OF THE DRAWINGS

The foregoing aspects and other features are explained in the following description, taken in connection with the accompanying drawings.

FIG. 1 shows an example of a general deep neural network.

FIG. 2 shows an example of inputs to each layer of an example convolutional neural network.

FIG. 3 shows an example convolutional neural network block illustrating locations of sparsity origin.

FIG. 4 shows an example granularity level of structured sparsity and the corresponding accuracy-sparsity trade-off curve.

FIG. 5 shows an example zero-gating method and a zero-skipping method.

FIG. 6 depicts an operation scheduling mechanism that exploits activation sparsity.

FIG. 7 depicts an example hardware pointer mechanism for next data address generation in the example 3-by-3 convolution step for the group of elements in focus to produce a single feature map element.

FIG. 8 shows an example minimal convolution, with 9 MAC operations per output cell.

FIG. 9 depicts a portion of a process for scheduling that exploits feature sparsity.

FIG. 10 is a graph showing an input sparsity total gain relative to a layer of a neural network.

FIG. 11 is a graph showing a forward looking sort gain relative to a layer of a neural network.

FIG. 12 is a data flow when leveraging the activation sparsity alone.

FIG. 13 is a data flow when leveraging both activation and feature sparsity.

FIG. 14 depicts the conceptual system architecture.

FIG. 15 shows an architectural view of an example convolution accelerator, designed based on the examples described herein to gain the benefits of both structured and non-structured sparsity.

FIG. 16 shows an example of computational flow through the 3 processing elements (PEs) in each CU of the example convolution accelerator.

FIG. 17 depicts the data flow when one value of the activation flow is zero, and the others in its vicinity are non-zero.

FIG. 18 depicts an example data flow when two values of the activation flow are zero, and separated by at least two non-zero values.

FIG. 19 shows the data flow in a 3 PE/CPU convolution accelerator architecture when two or more operand products (activation/weight) are zero.

FIG. 20 shows the data flow in a 3 PE/CU convolution accelerator architecture when two zero activation/weights are separated by 1 CC and again another 1 CC.

FIG. 21 shows the data flow in a 3 PE/CU convolution accelerator architecture where a sequence of two activation zeros are separated by 1 CC.

FIG. 22 shows an example computational flow.

FIG. 23 is an alternative depiction of FIGS. 20, 21 and 22.

FIG. 24 is a block diagram of one possible and non-limiting system in which the example embodiments may be practiced.

FIG. 25 is an example apparatus configured to implement the examples described herein.

FIG. 26 shows a representation of an example of non-volatile memory media used to store instructions that implement the examples described herein.

FIG. 27 is an example method, based on the examples described herein.

FIG. 28 is an example method, based on the examples described herein.

FIG. 29 is an example method, based on the examples described herein.

FIG. 30 shows example Boolean logic used to generate pointers from loaded status bits.

DETAILED DESCRIPTION OF EXAMPLE EMBODIMENTS

There are many machine learning hardware accelerators to execute neural network models. Depending on the workload, these hardware accelerators are power hungry. Moreover, most NN models are latency critical too, i.e. they come with strict time limits before which the calculations need to be accomplished.

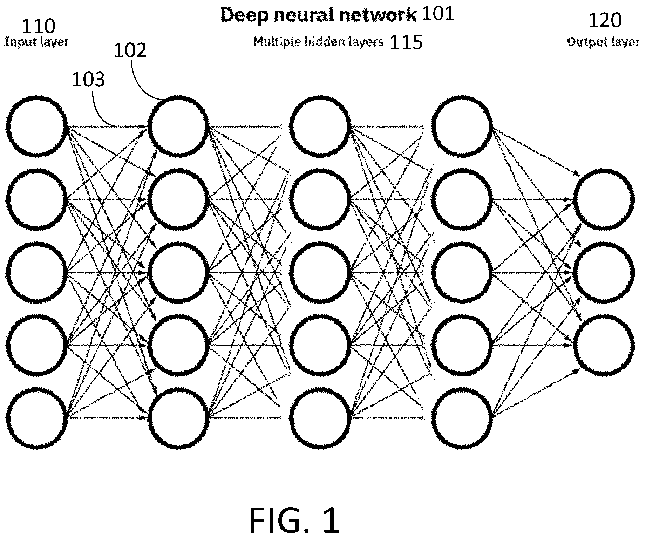

As a visual example, FIG. 1 shows a deep neural network (DNN) graph. The circles represent neurons (e.g. neuron 102) as described in equation 1, while the arrows between them (e.g. input 103) represent their inputs, labelled $x_i$ in the model of equation 1, to a neuron that arrives from the previous layer of neurons. The number of layers, and the depth of a layer (number of neurons in a layer) are defined by the model. But as an indication, the number of neurons of a model are counted in the tens of thousands and the number of weights for a model into the hundreds of thousands and, more recently hundreds of billions. In FIG. 1, the arrows indicate the movement of data between the neurons. The neurons area organized into layers, with the first one being called the input layer 110 and the result of the DNN being given by the output layer 120. The deep neural network 101 has multiple hidden layers 115.

A NN model is a set of neurons connected to each other in a systematic format. A basic model of a neuron can be mathematically modelled as:

$$y = f\left(\sum_{i=0}^{N-1} x_i * w_i\right), \hspace{3cm} \text{(Equation 1)}$$

where $x_i$ and y are the inputs and the output of a neuron, respectively, while $w_i$ represent the weights of the NN model. By $f()$, the activation function is labeled, which can be ReLU, *sigmoid*, etc. Different activation functions are interleaved to perform feature extraction (in other examples the different activation functions are interleaved with feature extractors) to add nonlinearity in neural networks to allow them to fit an arbitrary N-dimensional decision boundary for the target application (classification, regression, etc.). One of the most frequently used activation functions in real-world inference deployments is ReLU (Rectified Linear Unit), which discards negative values by clipping them to 0, while preserving positive ones as is.

The ReLU activation function is given by the mathematical formula as:

$$relu(A) = \begin{cases} 0 & when\ A \leq 0, \\ A & when\ A > 0 \end{cases}$$

This activation function is very simple to be realized in hardware (HW) thus much effort is put into using it as much as possible when the circuit implementation of a NN model is envisioned.

Each layer of a neural network learns a particular set of features from the input, prioritizing some activations while suppressing others. The deeper the layer, the more specific learned features are. Suppressed activations do not propagate information further through the network, thus creating sparsity (zero data) for the input of the next layer.

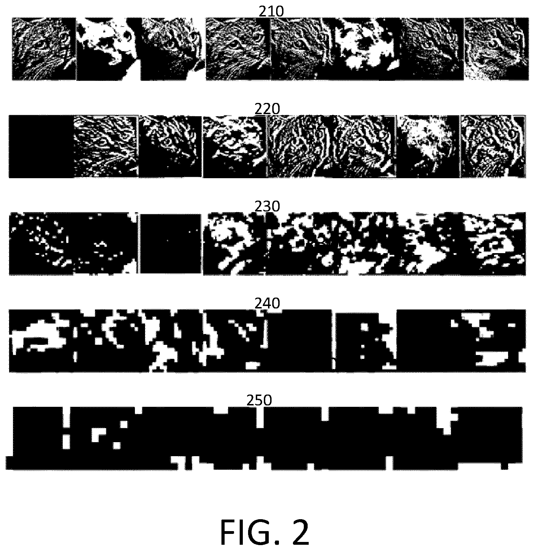

FIG. 2 shows an example of inputs (210, 220, 230, 240, 250) to each layer of an example convolutional neural network (top-to-bottom).

The combination of feature learning and activation functions is the source of compounding sparsity throughout the network.

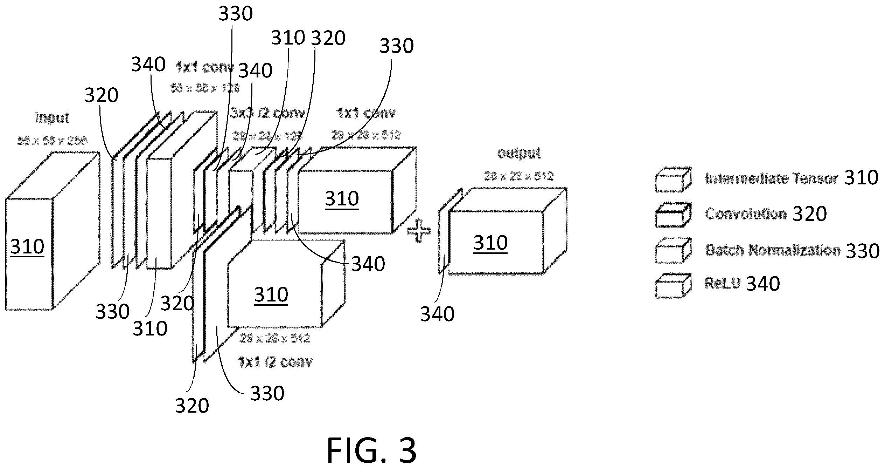

FIG. 3 shows an example convolutional neural network block illustrating locations of sparsity origin. Blocks 310 in FIG. 3 represent values (feature maps) computed and stored in memory between each convolutional (feature extraction) layer and passed as input (activation) to the following layer. Sparsity in those inputs to the neurons, which can be inputs to the NN (in the case of first layer) or outputs from the previous layer (in the case of the hidden and output layers), is referred to as activation sparsity. Blocks 320, blocks 330 and blocks 340 represent functional layers, each performing specific arithmetic operations on their inputs. Specifically, in this example (FIG. 3), the sparsity enhancing ReLU activation function is shown as blocks 340. Subsequent MAC (multiply accumulate) operations performed with zeros (convolutional filters or activations that result into zeros) are "useless" from the point of view of the inputs to the next layer of neurons. Outputs after combination of arithmetic operations performed by blocks 320, blocks 330, and blocks 340 are stored in the next block 310.

In general, for each input set to a neuron, there are the same number (labeled with N) of corresponding weights, that can be unique or not. At the HW level, in this example, the neuron would require in a classical approach N multiplications and N additions. These are usually coupled in sequence as 1 multiplication followed by one addition commonly referred to as 1 Multiply and ACcumulate unit or 1 MAC unit. The MAC sequence, of length N in this example, is followed by a single activation function, like ReLU, in order to get the value of the output y.

On the numeric side, HW has each numeric value represented in a finite number of bits. In particular, for interference the numbers are usually represented as integers or fixed-point numbers. In an example, 8-bit integer is assumed as the numeric format for the convenience of explanation. This means the maximum representable number lie in the range -128 to +127. The lower bound is usually referred to as MinInt and the largest as MaxInt. Decreasing the number of bits means decreasing requirements on the area and power of a circuit representation, but still a large number of MAC operations plus memory loads and stores are needed.

Sparsity can be classified into two main types: structured sparsity (block sparsity) and non-structured sparsity. Structured sparsity is typically achieved through pruning methods that involve incorporating regularization terms during the training phase of CNN models. This pruning algorithm allows for control over the level of sparsity, ranging from regular filter-level sparsity to fine-grained and irregular sparsity.

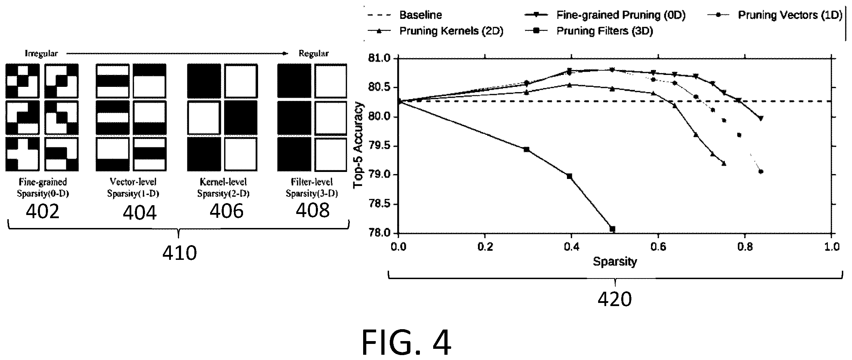

FIG. 4 shows different levels of granularity for structured sparsity (410) and the corresponding accuracy-sparsity trade-off curve (420). FIG. 4 demonstrates a crucial trade-off between granularity and accuracy in sparsity. Coarse sparsity levels (for example, vector-level sparsity (1-D) 404, kernel-level sparsity (2-D) 406 and filter-level sparsity (3-D) 408) enable more efficient hardware implementation but often result in a compromise on accuracy. On the other hand, fine-grained sparsity (402) offers improved performance but poses challenges in terms of implementation. The examples described herein focus specifically on fine-grained sparsity, also known as non-structured sparsity, and aim to address the associated challenges in hardware implementation. This description is aimed at sparsity in the weights, weights that are static during inference.

In addition to sparsity controlled by software, non-structured sparsity is an inherent property of CNN architectures themselves, primarily due to the prevalent use of the ReLU activation function. The ReLU function introduces input-dependent sparsity (also referred to in this text activation sparsity) as across the layers of the CNN, making it impossible to predict the locations of zeros. Consequently, it becomes crucial to tackle this non-structured sparsity during the runtime of the CNN model.

Effectively handling sparsity brings multiple advantages. By reducing the presence of unnecessary non-zero values, power consumption at both the processing unit and the DRAM memory can be significantly reduced. Furthermore, there is potential for reducing the latency of CNN accelerators, which is particularly desirable for applications in datacenters and user-facing scenarios where latency is of utmost importance.

Sparsity exploitation is based on the fundamental observation that zeros in operands do not affect the final multiply-accumulate (MAC) results. Consequently, sparse DNN accelerators adopt two main approaches: zero-gating and zero-skipping.

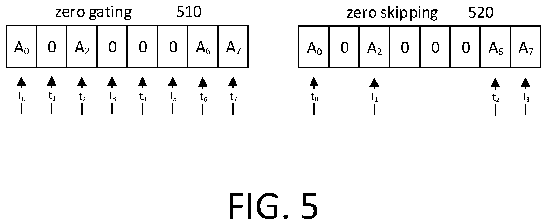

FIG. 5 shows a zero-gating method 510 and zero-skipping method 520.

Zero-gating processing elements (510) selectively deactivate arithmetic units within the PE (processing element) when the operand is zero, and still data is being read from the DRAM. This eliminates the switching activity within the combinational logic by turning off the toggling in the specific PE, in this case a MAC. Still latency of the computations is not affected by zero-gating (8 time moments to process 8 sets of inputs). While zero-gating improves energy efficiency by avoiding unnecessary hardware toggling, it does not provide improvements in terms of latency. Additionally, data reading limits the potential for substantial energy savings due to the underlying power bottleneck in the input-output operations.

Zero-skipping processing elements (520) actively skip zero operands to reduce latency, only feeding the PE synchronized non-zero elements . When the input operand (A) is zero, only the next non-zero element is fed into the MAC logic for calculation, utilizing only the relevant operands necessary for the final outcome. Weight memory access is based on the index of the non-zero element (e.g., $A_0$, $A_2$, $A_6$ and $A_7$ in this example), requiring additional control logic for efficient non-zero searching and routing. Zero-skipping, although occupying more area compared to zero-gating, has become the preferred method for achieving latency reduction (from 8 to 4 in the example of FIG. 5). Independent of whether data is being read or not from memory, zero-skipping is feeding the PEs only relevant data. But again, like zero-gating, zero-skipping does not implicitly mean that input data is not read from memory. In fact, many known approaches use the actual read input data to assess the presence of zeros.

There are several main techniques to avoid arithmetic operations on zero elements. The main approach is to load sparse data involved in the current convolution step into local memory and to compress it into a dense array by removing zero elements before providing the data to the ALU, or by masking elements of vector registers (SIMD vector processors) to overwrite corresponding results with zeros. Different variations of the concept are used by IP developers. For example a SIMD array and vector processor and a sparse matrix accelerator may use dedicated instructions which preload data elements into an intermediate staging area and then mask non-zero elements before supplying it to the ALU.

The majority of other existing hardware like TPUs (systolic arrays), GPUs (single instruction multi-threading, SIMT), and NPUs (neural processing units) either perform NOOP (no operations) on operands after checking at runtime if either of the operands is zero, or by performing the unnecessary computations nonetheless and gaining performance through massive parallelization. Other important ML architectures for hardware implementation, including hardware accelerators for deep neural networks, do not usually have power saving or neural network model execution schemes as the ones described herein.

Taking the example of a trained ResNet50, we observe that from the total number of operations, only 52% of them are necessary and the rest are operations that do not impact the output a the NN. To be more precise, 41% of the total operations involve activation sparsity and 7% on top of this involve feature sparsity. For the later category, both inputs and weights are still non-zero but the output of the neurons become zero after the follow-up activation layer.

In convolutional networks, a huge number of operations with zeros (sparsity in either operands, be it activations or weights) are performed or operations with non-zeros are performed that, in retrospect, do not influence the value of a feature map later in the network (sparsity in feature maps, also called further in this disclosure as feature sparsity). If an element of a feature map after activation, is zero, it did not have to be (accurately) computed in the preceding feature extraction layer. These characteristics are the exploitation points of the examples described herein. Even more so that area and power in the compute units, memory is the bottleneck of current computing systems, requiring optimizations of data orchestration techniques to obtain maximum hardware performance.

It is not possible in current state of the art to tell without the foresight if an element in the feature map will be useless after a follow-up activation layer. The mechanism to exploit this eventual uselessness is not as clear.

For these 59% of operations, operands are fetched through the memory hierarchy, operations on them are performed, and results are written back to memory. This is a huge cost and an inefficient use of resources that results in the loss of time and energy.

Described herein are control mechanisms that determine which operands (activations, weights) effectively get into the processing elements (PEs) and thus which multiplications and additions in a neural network (NN) model should be performed within each neuron, and which can be skipped. Described herein are two mechanisms for leveraging non-structural sparsity, one for processors, and the second for more parallel hardwired architectures. The main use case is AI/ML, but the mechanism can be applied in other contexts, for efficiently performing MAC operations when a part of the operands are zero. The examples described herein may also be used by some of the implementations of an early termination of the computation pipeline when the (final) result is not affected by continuing or not the specific computation flow. All this is done with limited increase in complexity of HW.

For processor architectures, described herein, is a smart controller or address generation unit (AGU) that dynamically yields to the processor the memory addresses of the next "necessary" elements, based on the state of computation. All this without the need for the processor to load each element and afterwards check if it is a zero or not. The mechanism avoids reading from memory, computing, and writing back to memory of zeros. An extension of the mechanism limits the number of MACs that will result in zero feature maps (output of the neuron) later in the network.

The examples described herein focus on avoiding computations and especially memory accesses by intelligently exploiting sparsity in inputs of each layer and predicted sparsity at the output of the neuron, after applying the activation. The first is facilitated by providing CPU addresses of next non-zero elements (positive or negative), and the second is facilitated by keeping track of the rolling accumulator value and contents of each of the two HW pointers.

For hardwired implementations (like for a convolution accelerator implementation) the controller described herein, together with the methodology utilize a combination of the zero-gating and zero-skipping schemes, and incorporate a control flow mechanism that effectively handles non-structural sparsity. This combination leads to a simplified controller than when using only zero-skipping and lower energy consumption than when using solely zero-gating.

Basically, to efficiently leverage sparsity, both at input and output of a neuron, the mechanisms described here are based on how and where the status maps like the zero map, sign map, and magnitude map are introduced, how and when those are built, and how they can be used to produce highly efficient HW.

Described herein is how the activation and feature sparsity mechanism works and how the pointer lists (see points 1.1 and 1.2) are defining the movement of data, together with the additional control mechanisms.

## 1. Smart address generation unit for processors

At a high-level, the herein described mechanism uses hardware pointers to indicate to the processor the memory location of the next useful element to read to be used in the computation. The pointers are generated based on status bits (values specifying properties of the word contained at the corresponding memory location, i.e. sign, zero, etc.) of a group of elements in focus, which can be stored in memory, that are involved in the current computation (e.g. a 3-by-3-by-C subset of a bigger image to be convolved with a filter of the same size). Hardware pointers are constructed by prefetching these status bits and applying specific Boolean logic on them to yield the index of the next useful element in the group to be loaded from memory.

The method can be used to exploit both structural and non-structural sparsity types. To avoid sparsity in activations/weights (multiplying with zeros), the aforementioned prefetching of zero-status bits is enough. To avoid sparsity in feature maps (outputs of the neurons), the value of accumulation at any point in time is tracked and convolution for the corresponding feature map cell is terminated once the accumulation becomes negative while no remaining products of activations and weights will result in positive numbers. It is not a foresight that completely avoids computations for feature maps that will become zero later in the network, but timely terminates any further MAC operations on a cell once the controller is sure the result of convolution is negative and will become zero later in the network. Same can be said for accumulation values that are above INTMAX and only positive products are left in this specific computation pipeline.

Constructing hardware pointers instead of loading and checking the content of each cell significantly reduces power use associated with DRAM/SRAM accesses and unnecessary computations. The overall approach at runtime controls and reduces the number of operations and memory accesses, thereby increasing speed, hardware utilization, and reducing power.

1.1 Methodology

The examples described herein differ from existing solutions by its use of dynamically updated hardware pointers (registers storing memory addresses) to decrease the number of unnecessary data loads from memory. They point to the next set of valid operands (pairs of activation and filter elements (also referred to as weights in parts of this text)) involved in the current step of computation (step of convolution - sum of elementwise products of activation and filter elements producing a single feature map element). Instead of loading all elements from memory and then performing computations based on the data, the examples described herein suggest the address of the next valid data element to load, thereby decreasing unnecessary data movement.

The herein described smart memory controller and the CPU share a finite state machine (FSM) that keeps track of the state of the convolutions. The memory controller prefetches status bits from memory for the group of activation and weight elements in focus, indicated by the FSM and stores it into fast local scratchpad, or a cache. Based on the convolution stage, the controller maps the loaded status bits into an index of the next valid operand within the group and then decodes it into a physical memory address, storing it into the hardware pointer register for the CPU to consume. The FSM of convolution indicates to the CPU to move onto computing the next element once the hardware pointer register content becomes zero (points to NULL). The FSM's next state is controlled by signals from the memory controller that indicates when no more valid operands for the current operation are to be expected. The FSM's next state is also controlled by the CPU, depending on the status maps and intermediate results.

The pointers are generated by the controller from the loaded status bits using Boolean logic, hardwired or computed. Since a MAC operation involves two operands (activation and weight), status bits of both must be combined to validate if the MAC operation as "useful". The status bits are bitwise compared (i.e., bitwise AND of zero bits, bitwise XOR of sign bits, etc.) resulting in a single status word with set bits corresponding to indices of the operands in the focused group that will produce a non-zero product or a non-zero feature map later in the network, respectively. The status word is consumed by the herein described AGU to map the status word into the memory address of the next "valid" operand element pair. Similarly, the operands could be ordered based on the magnitude map entries to feed the AGU in the correct order for the intended target. While in some cases it might be beneficial to start the computations from larger numbers, in others starting with lowest numbers is worth it. But this choice is application specific.

Use of status bits increases area (memory and logic), but substantially reduces the energy use associated with computations but even more so with useless and power hungry memory accesses because reads and writes of actual data (words of potentially multiple bytes, depending on the used accuracy) are not performed. Instead, groups of status bits are fetched (could also be cached for reuse), resulting in the cost reduction per memory access of:

$$cost_{reduction} = \frac{n}{(1-f)n + \frac{k}{n}}$$

where $n$ is the word width of actual data, $k$ the number of status bits per word, and $f$ the fraction of sparsity (~0.5 for regular sparsity in some residual network implementations). As it can be seen in the formula, there is a tipping point where the controller mechanism, even if very small is no longer beneficial.

Use of status bits also removes the need to write zero feature map elements (neuron outputs when zero) back to SRAM after a computation because only its zero status bit can be set. The content of the underlying memory location is irrelevant and can be disregarded when all computation decisions are based on the status bits of the corresponding memory cells. Reading and writing back to memory the status bits represents a fraction of reading and writing of the actual value, offering significant gain in energy (efficiency) and time (performance). An underlying memory cell content gets overwritten only when valid (non-zero) data needs to be stored after a computation, while old activation is no longer needed.

1.2 Implementation

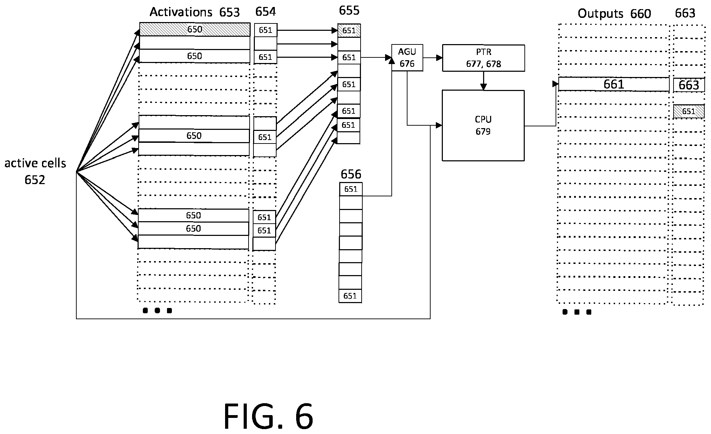

FIG. 6 shows a scheduling mechanism to exploit activation sparsity. In this example a group of elements in focus (active cells 652) of activations 653 are combined with corresponding weights (not drawn for figure simplicity) to produce result 661 of outputs 660. Diagonal pattern is used to show activations 650 that have the value 0. Corresponding to each of the values above, there is an associated activation status map 654, a status map of active cells activations 655, a status map of active cells weights 656, and an output status map 663. The diagonal pattern is also used for set bits 651 in the above zero status bit maps, corresponding to a zero in corresponding activations, weights or outputs.

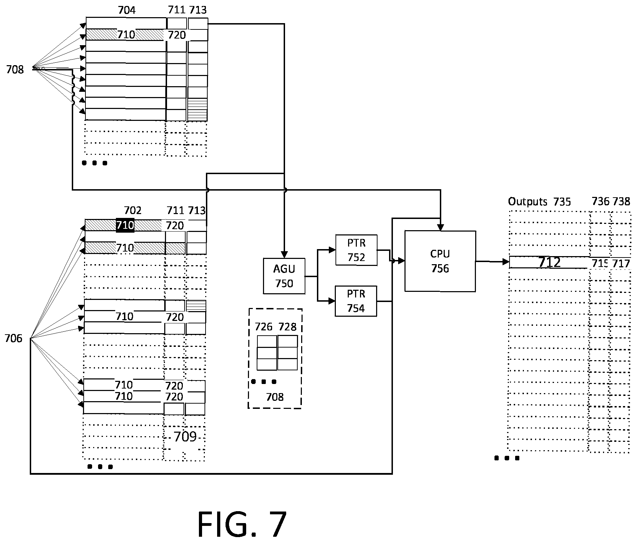

The backward slash pattern in FIG. 6 and FIG. 7 indicates as an example the location of zeros in values and corresponding set zero status bits. The horizontal pattern corresponds to set sign status bits.

Address generation 676 uses the status maps of active cell activations 655 and weighs 656 to provide pointers 677, 678 to next set of activations and weights that when multiplied produced a non-zero result. Zero status maps 655 and 656 can be bit-wise OR-ed to determine which of the pairs of associated activations 653 and weights would produce a non-zero product. The CPU 679 pops pointers 677, 678 and uses activation and weight for computation. When a computation is done, the CPU checks whether the result is zero and, if so, sets the corresponding output status bit. When storing each of the outputs 660, CPU 679 can skip storing a zero output and just store its corresponding set output status bit like 651. Additionally, if the weights are known not to be zero, like in the case of CNNs, only the activation status map of the active cells 655 can be used to generate pointers 677 and 678.

FIG. 7 shows the herein described hardware pointer mechanism for next data address generation in the example 3-by-3 convolution step, taking advantage of feature sparsity. To compute the current output 712 of outputs 735, elements in focus 706 and 708 of activations 702 and weights/filters 704 are being multiplied and accumulated, followed by the application of an activation function. To take advantage of feature sparsity, a Boolean block inside AGU 750 is using the status bits of each activation and weights (Z-zero 711 and 736, S-sign 713 and 738) to generate status register 709. Also, if not all status bits for input and weights could be loaded in one go, the FSM needs to take care that the lists of pointers are fed correctly for each neuron. Cells with zero are given as 710, and cells with the status bit set are given as 720.

Address generation unit 750 provides two sets of addresses 708 of: 1) operands producing the next positive activation-weight product (752), and 2) operands producing next negative input-weight product (754). The zero and sign maps are fed to the AGU, and Boolean logic and the status register 709 are in turn used to generate status registers 726 and 728.

The smart memory controller maps 750 the status register 709 into the offset of the next useful operand pair (pointed to by pointers 752, 754) in the focus group, which is then decoded based on the FSM state and used by the CPU 756 to load the next operand pair for computation. Based on current value in the accumulation, the CPU 756 can decide whether to pop pointer 752 or 754 until both are NULL or computation is terminated early. This is indicating to the FSM to move to processing the next output element. The CPU 756 determines the appropriate setting of status bits 715 ad 717 in status bit maps 736 and 738 and writes result 712 to outputs 735. Instead of writing zeros to output memory, the corresponding bit in Z status map 736 for the corresponding cell is simply set.

FIG. 7 visualizes the mixed mechanism for exploiting activation and feature sparsity. It yields two status registers (726, 728) and two hardware pointers (752, 756), one for an operand pair whose product will be positive (752) and one whose product will be negative (754) if multiplied (e.g. both operands are non-zero, sign of weight is positive and sign of activation is negative, hence if multiplied will result in a negative number). Alternatively, there can be multiple of these pairs for more parallelism.

Since the CPU 756 has no foresight to predict which feature map will become zero later in the network, feature map sparsity can be exploited only partially. The CPU 756 first consumes addresses generated by the positive hardware pointer 752 before starting to use the negative hardware pointer 754. Once the value of the accumulation for the current output element falls below zero and all remaining pointers are in the negative list, further computations can be prematurely terminated because they will only make the result more negative, which will be clipped to zero by the follow-up ReLU activation. Similarly, in the case of overflow in fixed-point arithmetic, the reverse can apply using similar reasoning. Another implementation can be more dynamical, when the extra logic is balanced by the benefit. In such an implementation the FSM would switch between the pointers indicating next positive and negative pairs of activation/weight as needed, to attempt to keep the result in the available dynamic range. This approach could also be used to increase accuracy of the result, avoiding situations like cancelation. The mechanism indicates to the CPU 756 at which point it can stop the current convolution step, knowing that no further operations will influence the value of the current output later in the network. The gain is then due to early termination and is equivalent to the number of skipped operations and the associated memory reads.

The FSM keeps track of the convolution state and data is stored in a dense tensor format, where the FSM can easily retrieve elements via appropriate stride access. Each word is associated with its personal status bits describing its contents (i.e. zero and sign, or other status parameters for more sophisticated status register generation, for example, based on magnitude such that the largest absolute products are accumulated first or last, depending on the need). Status bits are updated and written through to memory after each computation alongside the result, unless the result is zero in which case only the zero status bit is written. This writing back can be done smooth or in batches.

The working principle of the herein described solution is (1-4):

1. Skipping MAC computations and memory accesses for combinations of operands (weights and activations in AI/ML use cases) that do not affect the specific MAC output (e.g., produce zero when multiplied, or products too small to make an impact).

2. Stopping further MAC computations corresponding to the same output once the accumulator value saturated below MinInt (or a zero in case of ReLU) or above MaxInt and no further accumulation will shift the value back into permitted, non-saturated range.

3. Do not overwrite output memory locations with zeros, only set the corresponding zero status bit.

4. Computing and storing the status maps related to output.

The mechanism saves on the number of computations performed (increased speed and hardware utilization) and reduces useless read and write memory accesses (increased energy efficiency).

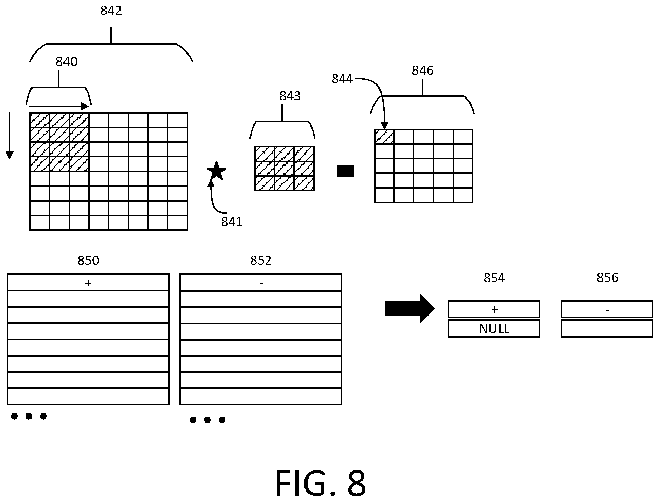

FIG. 8 shows an example minimal convolution, with 9 MAC operations per output cell. A typical MAC sequence is left-to-right and top-to-bottom. In FIG. 8, one smaller cell 840 of a larger cell 842 is combined (841) with the larger cell 843 to produce the result 844 in the output 846. FIG. 8 depicts a process for scheduling that exploits feature sparsity. The process is implemented with a positive queue 850 and a negative queue 852. The process proceeds by accumulating positives until none are left, or until the sum is (greater or equal) GEQ to maxInt. Add negatives until none left or sum (less or equal) LEQ to minInt (which can be zero). The processes switch back-and-forth if a corresponding threshold is reached and if the other queue (850, 852) is not empty. The MAC only dereferences positive pointer 854 until it points to NULL (no more pairs producing positive MULT) or AC exceeds maxInt. MAC dereferences negative pointer 856 until AC falls below minInt or until it points to NULL (no more pairs producing negative MULT). The process stops when a threshold is reached and an opposite sign queue is empty or when both queues (850, 852) run out. Combined weight/input pair's sign bits include (+/+ > +, -/- > +, +/- > -), the notation referring to the fact that the product of two positive number is positive, the product of a positive and a negative number is negative, and the product of two negative numbers is positive. The process updates pointers with a next corresponding +/weight/input pair address. The sum is set as AC += MULT, and an accumulation value comprising an accumulation of products is maintained. The pairs in each of the status bits can be ordered based for example on a sum of exponents of operands combination that fit in that queue (the combination of status bits is related to the size, as the combination of status bits can be an exponent in the case of a floating points, but does need to be). Pairs with weight or input of 0 are ignored and thus not read and not accumulated.

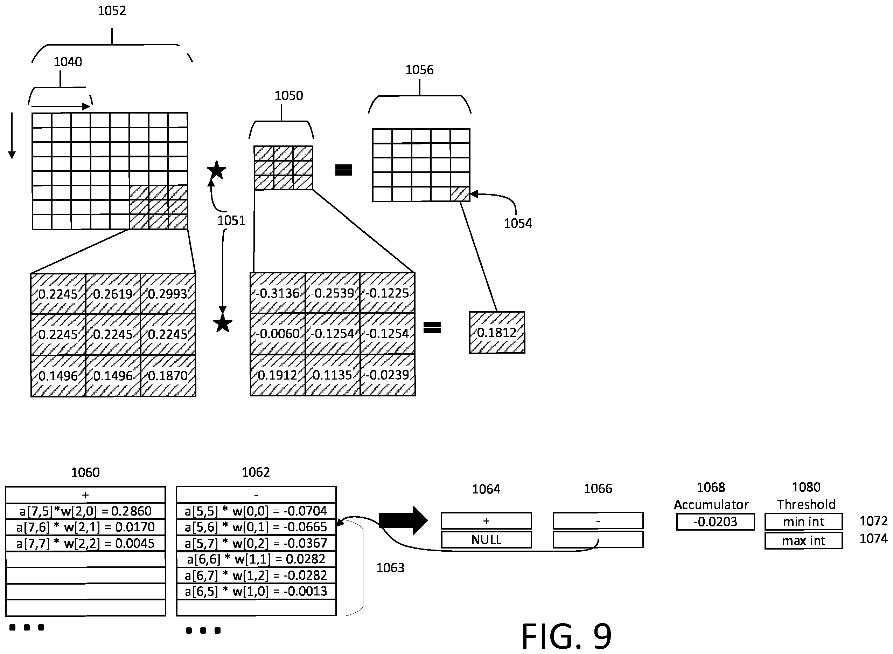

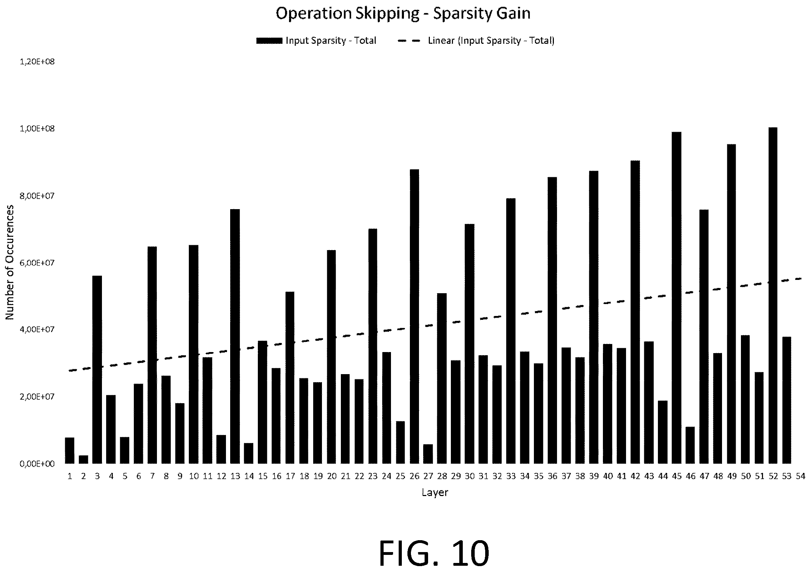

FIG. 9 depicts a portion of a process for scheduling that exploits feature sparsity. In FIG. 10, filter 1050 of a larger cell is applied (1051) to the larger cell 1052 to produce the result 1054 in the output cell 1056. Two non-zero multiply (MULT) result queues are implemented, namely a positive queue 1060 for positive results and a negative queue 1062 for negative results. Of the three results shown in the positive queue 1060 and the six results shown in the negative queue 1062, only actually computing four multiplications (with the associated accumulations) is needed to have an impact on the output of this example. A positive hardware pointer 1064 points to a next useful positive result, and a negative pointer 1066 points to a next useful negative result. Shown also is accumulation 1068, threshold 1080 including a minimum representable number 1072 and a maximum representable number 1074. Item 1063 depicts 5/9 saved operations.

The slashes in FIG. 8 and FIG. 9 are then forward slashes to indicate only the current values in the input (840) and filter (843), that are used to compute 844. Thus a forward slash pattern is shown in FIG. 9 as well as FIG. 8.

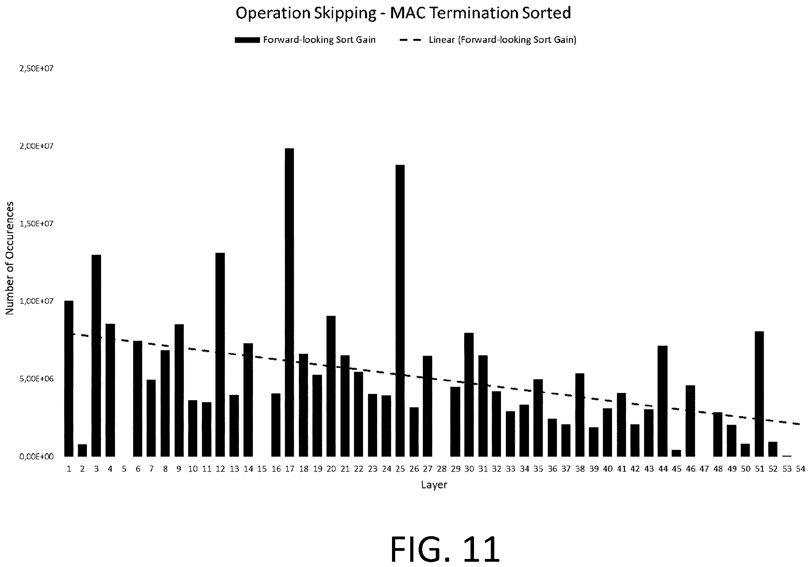

FIG. 10 is a graph showing the progress of input sparsity, i.e., number of activation values being zero over the different layers of a trained Resnet50 example. FIG. 11 is a graph showing a forward looking sorted gain over the different layers of a ResNet50 example.

1.3 Flowcharts

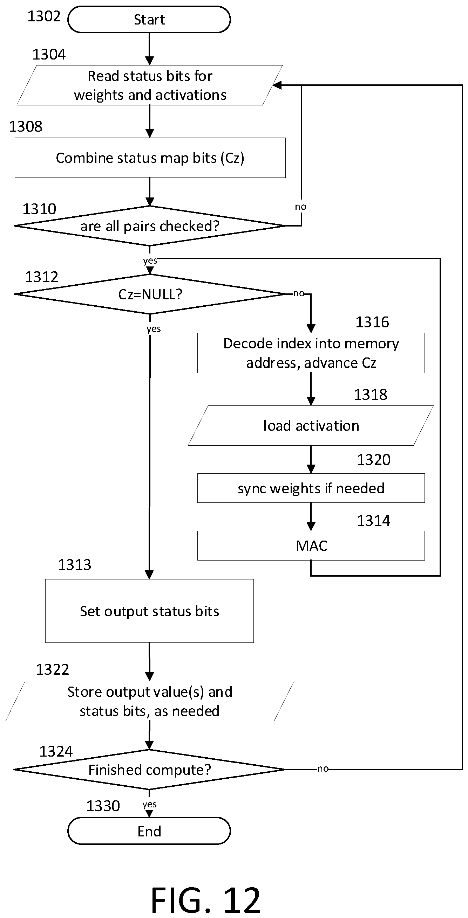

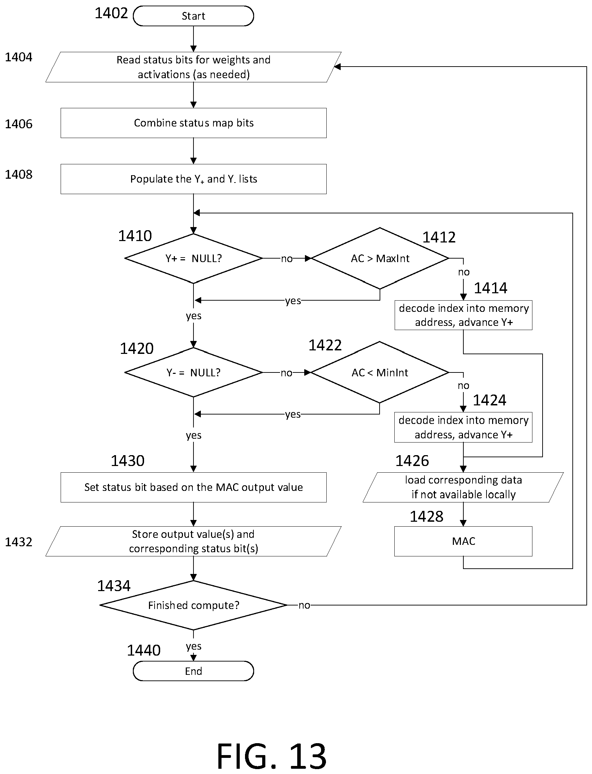

FIG. 12 shows a data flow when leveraging the activation sparsity alone. At 1302, the method starts. At 1304, the next status bits of weights and activations are read. At 1308 combined status map bits are set. At 1310, it is determined whether all pairs are checked for a specific output or set of outputs. If at 1310 it is determined that all pairs are not checked, for example "No", the method transitions to 1304. If at 1310 it is determined that all pairs are checked, for example "Yes", the method transitions to 1312. At 1312 it is determined whether the status map Cz is empty. If at 1312 it is determined that the status map is empty, for example "Yes", the method transitions to 1313. At 1313, the outputs status bits are set. From 1313, the method transitions to 1322. At step 1322 the result is stored (if non-zero) and the status bits are set corresponding to the result, or the result is passed to other operations like the activation. If at 1312 it is determined that the status map is not empty, for example "No", the method transitions to 1316. At 1316, the index of the next set bit in status register Cz is decoded into the memory address of the corresponding weight and activation. At 1318, elements are loaded, while at 1320 the weights, if already loaded, are synchronized with the correct activation before moving to 1314. At step 1314, a MAC operation is performed, the used status register bit can be cleared or passed over, and the method proceeds to check whether there are still unprocessed elements. From 1314, the method transitions to 1312. At 1324, it is determined whether the computation is finished (for example other neurons to be computed). If at 1324 it is determined that the computation is not finished, for example "No", the method transitions to 1304. If at 1324 it is determined that no more outputs are left, for example "Yes", the method ends at 1330. In FIG. 13, the flow is sequential, but the flow in FIG. 13 is also suitable for parallelism, and even different widths for the first part (computing the combined status map 1304-1310) and the second part (actual computation 1312-1324). The flow in FIG. 13 can also be parallelized, by doing the status bit combination at the same time with the actual data manipulation like load activations and weights as needed, MAC computation, setting status bits based on the output of the neuron, storing outputs and their corresponding status bits if needed. Another parallelization can be done over neurons or layers, etc.

FIG. 13 shows a data flow when leveraging both activation and feature sparsity. At 1402, the method starts. At 1404, the next status bits of weights and inputs/activations are read if needed. At 1406 the status map bits are combined and the positive and negative queues Y+ and Y- are populated at step 1408. At 1410 the positive queue Y+ is checked whether empty (NULL), for example "Yes" the method transitions to step 1420. If for example "No" is determined at 1410, the method transitions to step 1412 where the value of AC is compared with MaxInt. If at step 1412 AC is larger than MaxInt, "Yes", the method transitions to step 1420, while for "No" the method goes to step 1414 and decodes the index of current pair from Y+ into memory address and advances Y+. Afterwards step 1426 is performed, loading corresponding data if not locally available, for both activations and weights. At step 1428 the MAC operation is performed, the accumulated result being kept in AC. From here the method progresses back to step 1410. At step 1420 the negative queue Y- is checked whether empty (NULL), for example "Yes" the method transitions to step 1430. If, for example "No", the method transitions to step 1422 where the value AC is compared with MinInt. If at step 1422 AC is lower than MinInt, "Yes", the method transitions to step 1430, or for "No", the next step taken is 1424 to decode the index of the current pair from Y- into memory address(es) and advances Y-. After 1424 the next step is 1426, discussed above.

At 1430, the status but is set based on the MAC output value. At 1432, one or more output values and one or more corresponding status bits are stored. At 1434, it is determined whether the computation is finished (for example other neurons to be computed). If at 1434 it is determined that the computation is not finished, for example "No", the method transitions to 1404. If at 1434 it is determined that no more outputs are left, for example "Yes", the method ends at 1440.

1.4 Advantages and Technical Effects

The mechanism exploiting regular sparsity, only using the zero-status bit, is generic in nature and can be applied to other signal processing or other computing domains like data analysis and is not only restricted to AI/NIIL.

Based on the area/power/latency budget, one or both sparsity types, i.e., activation and feature sparsity mechanisms can be exploited by using appropriate status bits. Activation sparsity has the least hardware cost and the most impact on convolutional networks, thus the easiest to leverage.

Conceptually, instead of the CPU checking at run-time which weight or activation is a zero, the memory controller provides the CPU an address at which the next non-zero element is located, if any. By computing and classifying separately the addresses for operands that produce positive and negative multiplication results, the mechanism can also exploit sparsity in feature maps.

2. Mechanism to leverage sparsity in a hardwired solution

Additionally, the same or slightly modified controller or AGU described above can be used where a specific scheme of synchronization between activations and weights is required (like in the case of a convolutional accelerator hardwired architecture or a systolic array). Restricting to the activation and weight sparsity in a HW accelerator with increased parallelism, it is possible to consider the synchronization of the activation with the weights, and both operands be fed correctly to the MAC units. An example here is when either weights or inputs are kept local to the HW accelerator.

An idea driving the herein described method is based on the observation of "divide and conquer", with the aim of simplifying the control mechanisms/HW. Rather than solely relying on the pure zero-skipping method, the complex control policy is divided into simpler basic blocks by strategically interleaving special zero-gating "0". In other words, instead of treating all "0" values as candidates for zero-skipping, certain "0" values are deliberately selected for zero-gating. These intentionally chosen zero-gating zeros that propagate through the data computation pipeline enables the HW designer to break down the dependency chain of skipping computations into these simple basic blocks. Within each basic block, the control policy becomes simplified, requiring minimal hardware resources. Additionally, the method includes provisioning outputs for the early terminated computations, either in a local or off-chip storage.

2.1 Methodology

The herein described method requires having the zero distribution (see zero map) prior to the actual computation of the current layer and scheduling the zeros as either zero-skipping zeros or zero-gating zeros. The zero-scheduler is implemented in conjunction with the zero-map. The input to the zero-scheduler is the sequential bitstream derived from the zero-map, allowing for runtime assignment of zeros without waiting for all computations to be completed. The zero-scheduler assists the HW controller in determining whether to skip reading the zero-input as a zero-skipping zero or generate an on-chip zero (rather than reading a full precision "zero" from the off-chip DRAM) as a zero-gating zero.

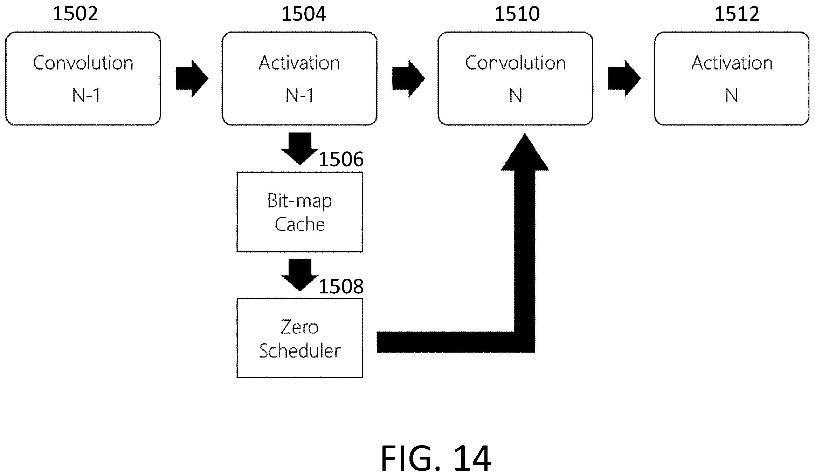

FIG. 14 shows the conceptual system architecture, including convolution N-1 1502, activation N-1 1504, bit-map cache 1506, zero scheduler 1508, convolution N 1510, and activation N 1512.

The problem is split in basic blocks, where a basic block is defined as the computational flows that could be scheduled independently from the other basic blocks. The form of basic block is dependent on the actual HW implementation and the SW data flow (different spatial parallelism and temporal stationary methods). The herein described concept could be best illustrated by a systolic array architecture implementing a tensor processing unit (TPU). Another example is a convolutional accelerator, which may be implemented as a one-dimensional systolic array specialized for a residual CNN and has an efficient IO (one input per clock cycle (CC)) and weights changed at a slower rate.

In a general case, activations and weights are interchangeable in the examples and mechanisms below. Sparsity in the slow-changing input to PEs (usually weights) can also be accounted for by zero-gating the corresponding PE or optimally scheduling the operations. On top, the zero status maps of weights and activations can be combined and used just as well in the explanations and mechanism below.

2.2 Example application

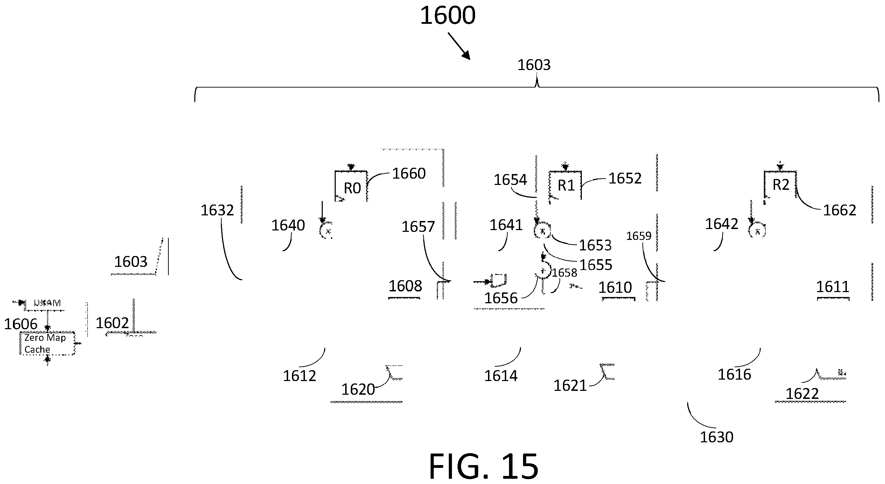

FIG. 15 is an architectural view of an example convolutional accelerator architecture 1600, which makes use of a zero controller 1602 and zero map cache 1606. The activations of the CNN are broadcasted over inputs_1 to inputs_N. This route can be used for different inputs to each CU like activations and weights. As a more detailed example, FIG. 15 shows zooming in CU_1 1603, on the right side. The data flow is pipelined using ACC0 1608, ACC1 1610, and ACC2 1611 in registers in PE_0 1612, PE_1 1614 and PE_2 1616 that are then combined accordingly with the products of PE_1 1614, PE_2 1616, and PE_0 1612, respectively, to produce results B1 1621, B2 1622, and B0 1620, respectively that are than passed to a temporary storage (not shown) from where they can be looped back to certain PEs or outside the CU.

The HW that leverages this way the activation sparsity is focused on two aspects. First, the zero cache 1606 determines and/or obtains the distribution of zeros to tackle the problem of expensive I/O. Secondly, the zero controller 1602, together with the routing 1630 (from Acc2 1611 to the input 1632 of PE_0 1612) and multiplexing (at M0 1640, M1 1641, M2 1642), could be used to control the independent computational flow.

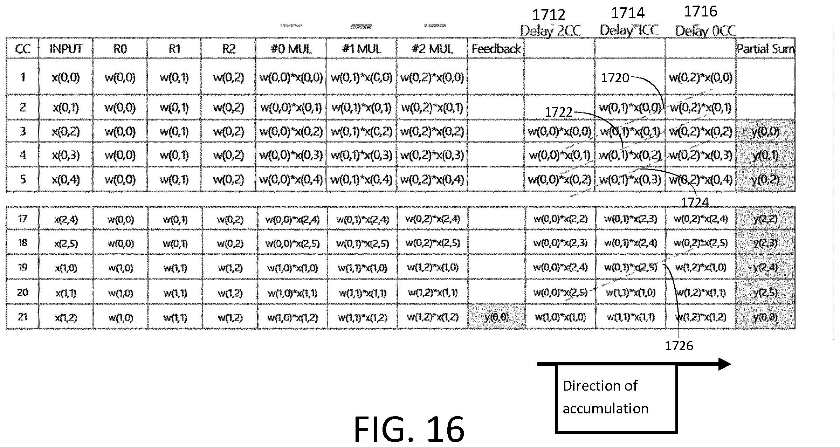

FIG. 16 shows an example of computational flow through the 3 PEs (1612, 1614, 1616) in a systolic array of the convolutional accelerator architecture depicted in FIG. 15. The architecture's basic building block is a compute unit (CU) (e.g. CU_1 1603) that contains 3 processing elements (PEs 1612, 1614, 1616). In other designs, the number of PEs and CUs can vary. Thus the weights and activations are reused across different cycles in a regular pattern. From the specific computational flow of the convolutional accelerator of FIG. 15, it is possible to use the herein described steps to find the basic blocks and perform the zero-scheduling with zero controller 1602. In this example, the weights are kept stationary, stored in local registers, and the inputs are broadcasted to all (in this example 3) PEs in a CU, but delay is introduced at the accumulation phase of the computation. To accumulate the correct products, inside the i-th PE ($PE_i$) (e.g. PE_1 1614), the weight from its local register $R_i$ (e.g. R 1652) is multiplied (1653) with the input $I_k$ (e.g. input 1654) coming in at k-th CC to compute the product $P_i = R_i * I_k$ (e.g. product 1655) and accumulated (e.g. accumulator 1656) with the value $A_{i-1}$ (e.g. value 1657) another input to $PE_i$ (e.g. PE_1 1614). This accumulated result, labeled $A_i$ (e.g. result 1658) is either passed to a register $ACC_i$ (e.g. ACC 1610) inside $PE_i$ (e.g. PE_1 1614) and 1 CC later is passed to the next PE ($PE_{i+1}$) (e.g. PE_2 1616 via 1659), or to the output to be reused or written in off-chip memory. As inputs to the accumulator $ACC_i$ it is possible to have a constant, the output of $ACC_{i-1}$ (e.g. value 1657) or another value from a PE or memory.

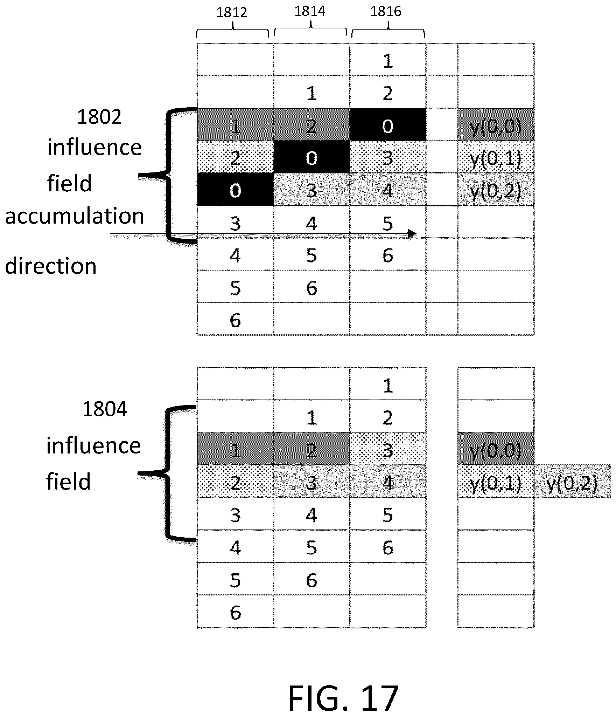

To better visualize the data flow over multiple PEs and CCs, the behavior described above is captured for an example HW implementation into a table format in FIG. 16 for semi-static weights and faster-changing activations. The first part of the table indicates the CC, the off-PE inputs (activations in this examples), values stored into registers R0 1662, R1 1652, R2 1662 (weights in this example) and their respective multiplication. The second part of the table captures the delays introduced by the registers $RACC_i$ in columns "Delay 2CC" 1712, "Delay 1CC" 1714 and "Delay OCC" 1716. This delay is influencing the data flow, where the largest delay, 2 CC in this example, towards the result is coming from the left most PE($PE_0$). For each output the method sums over the delayed columns in the same row, e.g., output y(0,0) is computed as y(0,0)=w(0,0)*x(0,2) + w(0, 1)*x(0,3) + w(0,2)*x(0,4), as also indicated by direction of accumulation arrow in FIG. 16 (refer also to the accumulation direction arrow in FIG. 17). This means that a broadcasted input is propagated towards the result 0 CC, 1CC, and 2CC later, i.e., activation x(0, 2) is used to compute outputs y(0,0), y(0,1), y(0,2). Thus, keeping weights stationary requires delayed activations, and this delay complicates the zero-controller compared to the case when the input is stationary. Generalizing, for n PEs, results in having delays of n-1, n-2, ...., 1, 0 towards the result. The delay is used to accumulate the partial results from a previous PE into the current one. The diagonal lines (1720, 1722, 1724, 1726) accentuate the delay in activations.

To generalize, consider n as the number of PEs in a CU (for example PE_0 1612, PE_1 1614, and PE_2 1616 in CU _1 1603). Examine the case of having two zero activations and identify the basic blocks that can decouple these zeros from each other. This enables shrinking of the number of cases to a limited set based on the influence field of the specific CNN accelerator (mainly n). In the convolutional accelerator architecture depicted in FIG. 16 (n = 3), there are three cases to consider: zeros separated by more than 2CC (n-1), zeros separated by 1CC (n-2), and zeros adjacent to each other (OCC separation). Scaling with n it can get complicated quickly.

The goal of designing this control policy is to find the basic blocks of zero-skipping, like "xx 0.....0 xxx 0...... 0 xx" and observe which cases can be treated alike.

A Single "0" activation in between non-zero activations

Referring to FIG. 17, consider the scenario with only one "0" activation and identify the influence field (1802, 1804) of the input within a specific computational flow. The influence field (1802, 1804) signifies which partial results will be affected by a particular input. FIG. 17 shows the data flow when one value of the activation flow is zero, and the other activation values in its vicinity (2 CC before and 2 CC after) are non-zero. Generalizing, there is a single zero-valued activation, but the previous n-1 and next n-1 activations are non-zero. Shown are the outputs of 3 consecutive PEs 1812, 1814, and 1816, delayed with 2, 1, and 0 CC, respectively compared to the inputs. This delayed accumulation is pictured in FIG. 17 by the accumulation direction arrow, meaning the delayed products in a row are added to create a partial result. For example products 4-5-6 are added to create y(0,4). For the single zero-skipping scenario, considering the flow of zero-activation values shown in FIG. 17, products 1-2, 2-3, and 3-4 can be combined to get the corresponding results. For speed-up, at least two results can be computed and should be stored in the local memory, in our example y(0,1) and y(0,2) can be ready at the same time.

In FIG. 17, FIG. 22, and FIG. 23, elements having a similar pattern should be considered together.

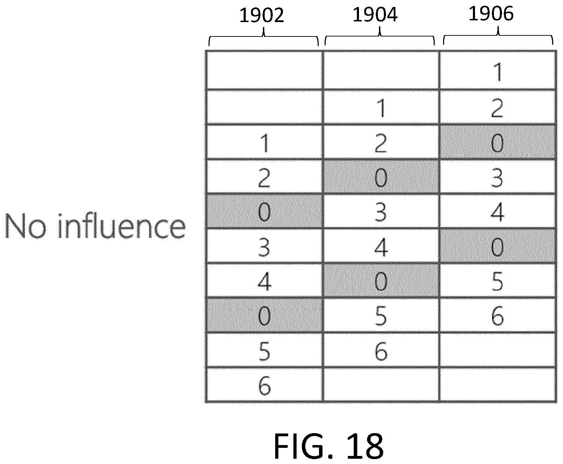

In the example of 3 PEs, when the zeros are separated by at least 2 (generalizing n-1) non-zero consecutive activations, the two zeros can be considered independently, as two times a single "0" (see above). FIG. 18 shows delay flows 1902, 1904, and 1906, corresponding to 2CC, 1CC and 0CC, respectively. 2. Multiple consecutive "0" activations, in between non-zero activations.

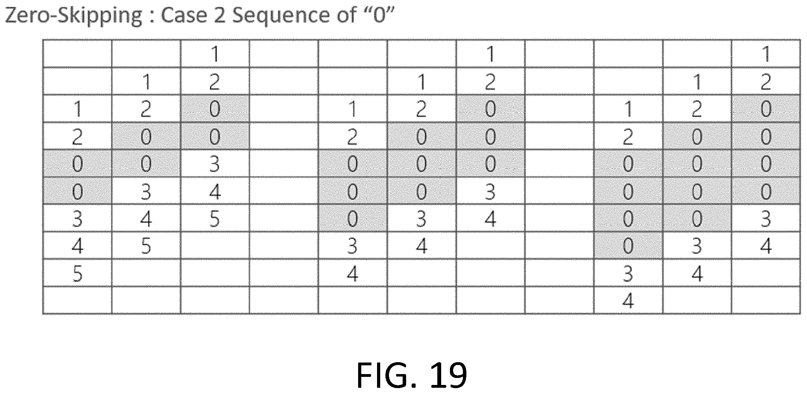

FIG. 19 shows an example data flow in 3 PEs (such as in the 3 PEs (1612, 1614, 1616) shown in the convolutional accelerator architecture 1600 depicted in FIG. 15) when two or more consecutive activations are zero. In FIG. 19, it can be observed that a sequence of "0" for zero-skipping is to now combine the 12, 2, 3, 34 for results. In FIG. 19, it can be further observed that 2, 3, 4, etc., consecutive "0" activations be treated as 2 consecutive "0"s. Also in this case, as above, the possibility for 2 results is needed to be stored in the local memory of architecture 1600. The ideal scenario for basic blocks is when one or multiple zeros are separated by more than 2CC (generalizing n-1 CCs), than one can refer to points 1 or 2 just above ("A Single "0" activation" or "Multiple consecutive "0" activations").

3. Multiple zero-activations close to each other.

In this example consider 3 PEs. In a more general case, the number of independent scenarios will be increasing (maybe exponentially) with the number of parallel PEs working on the same activation value.

4. Zero-activations separated by 1 non-zero activation

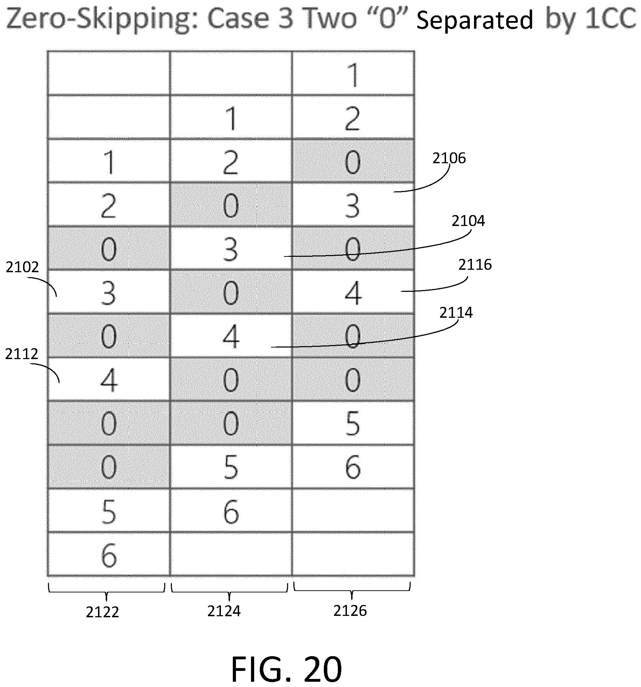

FIG. 20 shows an example data flow in a 3 PE/CU (architecture in FIG. 15) when two zero activations and/or weights are separated by 1 CC (2102, 2104, 2106) and again another 1CC (2112, 2114, 2116). This case is more complex because the next "0" will also influence the control policy of the previous "0". In FIG. 20, it can be observed that it is hard to come up with a control policy that fits all the situations of this case. And when generalizing for more PEs, scaling the problem the controller needs more branches, thus increasing in complexity. FIG. 20 showcases a data flow which proved to be most difficult to implement in an FSM because of the number of possible ramifications and special cases. It can be observed that using zero-gating is simplifying the control mechanism in this case.

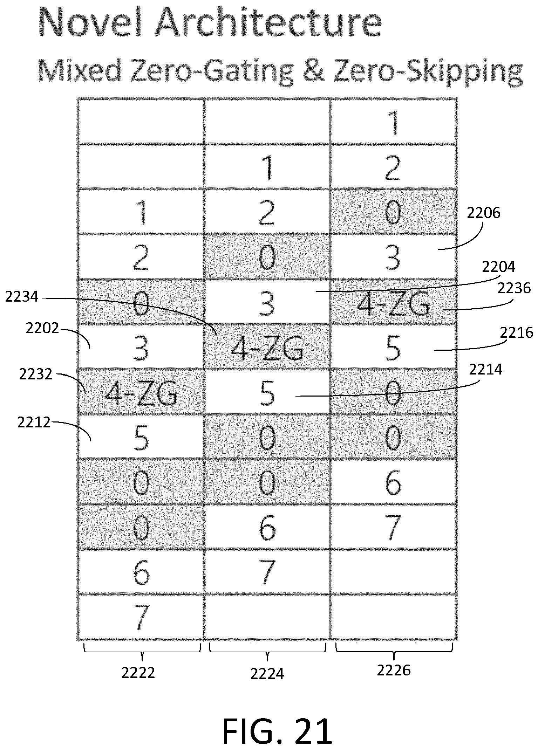

FIG. 21 shows an example on how the sparsity controller could be simplified in the case of the data flow described in FIG. 20 where a sequence of two activation zeros are separated by 1 CC (2202, 2204, 2206, 2212, 2214, 2216). Shown in FIG. 21 are products performed in processing element (PE) 2222, PE 2224, and PE 2226. Referring to FIG. 21, replacing the middle zero skipping in FIG. 20 for the middle zero with zero-gating (2232, 2234, 2236). Indeed increases the latency of the computation with 1 CC every time this situation occurs compared to fully zero-skipping. But if this situation is not very common, taking this approach drastically simplifies the logical scheme of the sparsity controller or AGU, also called the zero controller 1602 in FIG. 15.

In FIG. 21, it can be observed that since the problem of the pure zero-skipping method is the "0x0" problem, it is possible to change the second 0 with a zero-gating 0 (2232, 2234, 2236) denoted with "ZG". As can be seen in FIG. 21, the third zero activation in this example can be treated completely independent from the first two zeros. This effectively shrinks the control policy to case 1 with only one 0 (FIG. 17) and case 2 with a sequence of "0" (FIG. 19), where both have a simple control policy. This zero-gated "0" does not have to be read from the memory, but generated on-chip since the existence of the zero-gated "0" is known from the set zero-status map elements. Whether the zero-gating is actually implemented or it is just that a zero activation is created on the chip, still power gains come from not reading the zero form memory or having a highly simplified

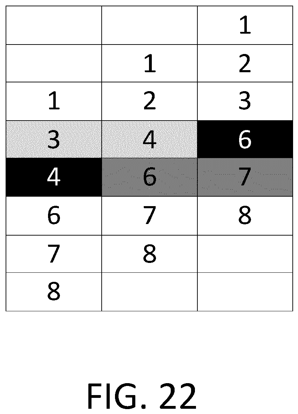

The computational flow could be shown as in FIG. 22. During this flow two SRAM ports are needed since at CC3, both the 3+4 and 3+4-ZG results need to be written to SRAM. The same two ports are needed during CC6 to write the result of 6+5 and 6+7. The zero controller 1602 may contain the AGU 676 from the CPU example for activation sparsity plus some extra logic to handle the points 1 (Determine the influence field of a Single "0" activation), 2 (Identifying Basic Blocks for Two Zero Activations and Decoupling: 2 zeros separated by at least n CC), 3 (Enumerating independent cases), and 5 (Solve the dependent cases by choosing the proper "0"s to be Zero-gated) above. The zero status map cache 1606 may also be implemented, having at least space enough for part of the activations and weights. The architecture 1600 may also ensure that the early terminated results can also be pushed out of the CU to the correct storage. Or another register may be used to loop the product 6 into PE0 1612, to be added with 4 into PE1 1614.

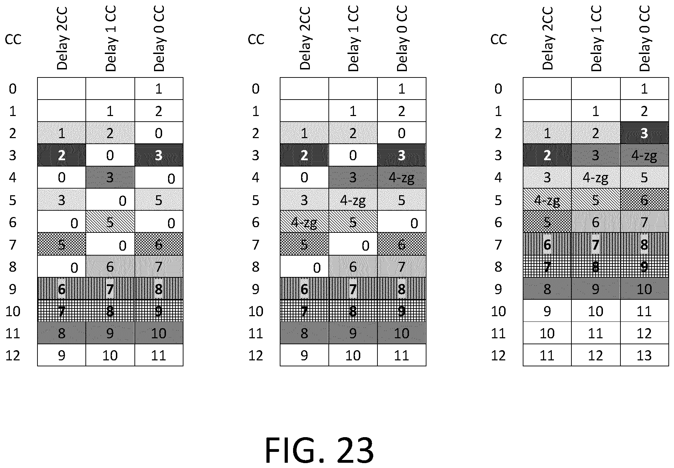

FIG. 23 is an alternative depiction of FIGS. 20, 21, and 22, which alternative depiction may be considered as one figure and put in parallel to see how on the left side it would compute with zeros, on the right side would skip 2 of those zeros and compute or apply zero gating for 4-zg.

2.3 Advantages and Technical Effects

1. Structured Approach to Tackle Fine-Grained Sparsity: The herein described method offers a structured approach to identify basic blocks and effectively handle fine-grained structured and non-structured sparsity. This approach allows for more efficient utilization of hardware resources.

2. Addressing Implementation Problems of the Zero-skipping method: The examples described herein address the implementation challenges associated with the zero-skipping method in the case of activation sparsity by reducing the complex computational flow into a limited number of simple schedulable flows. The same mechanism could be applied to the fast changing PE input or to the combined zero status maps of both weights and activations. This leads to significant power savings and improved latency, enhancing the overall efficiency of the CNN accelerator.

3. Dynamic Operation at Run-Time: The bit-map and zero-scheduler components of the herein described method can operate dynamically at run-time. This means that the distribution of zeros and their assignment can be determined during the inference process, allowing for real-time optimization.

2.4 Further Considerations

1. Dependency on CNN Architecture and Computational Flow: The herein described method is dependent on the specific CNN architecture and its computational flow. Some architectures may not have well-defined basic blocks, limiting the applicability of the herein described approach in such cases. But still, worst case, zero gating (with zeros generated on chip instead of read) can be used to save power.

2. Latency Improvement Dependent on sparsity: The extent of latency improvement achieved through the herein described method is dependent on the operand data itself, i.e., number of activation zeros. Different input patterns may yield varying levels of improvement, and there may be cases where the latency improvement is not as significant.

These advantages and further considerations help provide a comprehensive understanding of the strengths and potential constraints associated with the herein described methods.

3. Further Advantages and Technical Effects

Next generation 6G communication technology and standards aim to be faster, bigger, just simply better than 5G and will leverage many antennas, many users, huge bandwidths, low latency, faster moving channel conditions, etc. Thus, everything should, in principle, scale up except the cost, thus except area, power, price. In this new endeavor, besides the classical signal processing algorithms, the main new start is AI/ML (artificial intelligence/machine learning). But while there are indications that AI/ML assisted receivers and transmitters, even at L1 can be outperforming the classical approaches, the problem is the cost of a corresponding implementation. Thus, to gain in the flexibility that AI/ML is bringing to the table, one has to pay a huge cost when looking at the hardware implementation. The good part is that the HW implementation of the AI/ML algorithms is starting to get traction and results. In this context, the hardware implementation methodology described herein may be used, as well as the address generation unit/controller. The advantage of this hardware implementation is its simplicity and decoupling from the specific AI/MI, algorithm, thus changes in the NN structure may, if at all, only require small adaptations. This makes controllers based on the herein described methodology very flexible and future proof.

The examples described here have the greatest advantage in that they are orthogonal to the algorithmic work, and can be applied on a large range of computations, and not limited to the CNN discussed above. And they can do so without imposing any constrains on the NN designer, like other methods, including structural sparsity methods. Hence, described herein is a general methodology and implementation of hardware that can very efficiently leverage sparsity to offer ~2x lower energy consumption, about one-half (1/2) computation latency at the low cost of the custom address generation unit and controller described here. This is not a general number, but is based on one of the CNN examples. Actual benefits depend on the level of sparsity in the weights or activations. An important bottleneck in AI/ML that can be eased is data movement. Decreased to a minimum is the amount of data that is moved to and from external memory for weights and partial results, by only reading and writing the useful data. This methodology with the associated implementation increases the chance of AI/ML being implemented into 5G.

The herein described hardware implementation involves efficient HW running at all layers of a telecommunication system, as discussed herein, with limited disruptions of a classical HW architecture, be it a CPU like or a full-blown hardwired solution.

The herein described implementation, though initially conceived as an ML accelerator, is a suitable general-purpose mechanism for accelerating sparse matrix arithmetic operations in a DSP, linear algebra, etc. and for reducing power use corresponding to unnecessary memory accesses.

These mechanisms and controllers do not compute when operands (be it activations and weights for the CPU example, and inputs for the HW accelerator example) are zero, by not performing some of the computations, changing computation time with changing activation sparsity. Higher levels of activation sparsity will correspond to lower computation time. Also, the pattern of activation sparsity will impact the computation time, since the ZG-ZS mechanism can increase the computation time. Separate smaller memories may be implemented next to the main scratchpads/caches or DRAM that keep track of status bits. The examples described herein result in decrease in memory energy use, proportional to the amount of sparsity in the network, and may implement special instructions for fetching status bits and mapping them into memory addresses in the case of a processor like a CPU.

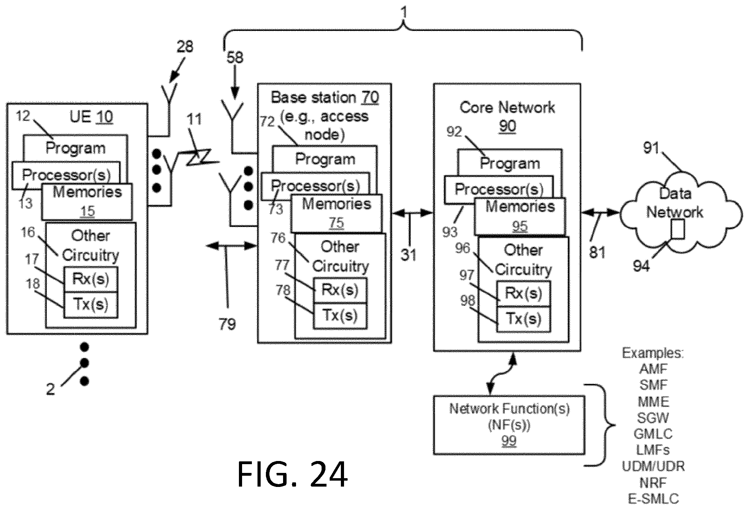

FIG. 24 shows a block diagram of one possible and non-limiting example of a cellular network 1 that is connected to a user equipment (UE) 10. A number of network elements are shown in the cellular network of FIG. 24: a base station 70; and a core network 90.

In FIG. 24, a user equipment (UE) 10 is in wireless communication via radio link 11 with the base station 70 of the cellular network 1. A UE 10 is a wireless communication device, such as a mobile device, that is configured to access a cellular network. The UE 10 is illustrated with one or more antennas 28. The ellipses 2 indicate there could be multiple UEs 10 in wireless communication via radio links with the base station 70. The UE 10 includes one or more processors 13, one or more memories 15, and other circuitry 16. The other circuitry 16 includes one or more receivers (Rx(s)) 17 and one or more transmitters (Tx(s)) 18. A program 12 is used to cause the UE 10 to perform the operations described herein. For a UE 10, the other circuitry 16 could include circuitry such as for user interface elements (not shown) like a display.

The base station 70, as a network element of the cellular network 1, provides the UE 10 access to cellular network 1 and to the data network 91 via the core network 90 (e.g., via a user plane function (UPF) of the core network 90). The base station 70 is illustrated as having one or more antennas 58. In general, the base station 70 is referred to as RAN node 70 herein. An example of a RAN node 70 is a gNB. There are, however, many other examples of RAN nodes including an eNB (LTE base station) or transmission reception point (TRP). The base station 70 includes one or more processors 73, one or more memories 75, and other circuitry 76. The other circuitry 76 includes one or more receivers (Rx(s)) 77 and one or more transmitters (Tx(s)) 78. A program 72 is used to cause the base station 70 to perform the operations described herein.

It is noted that the base station 70 may instead be implemented via other wireless technologies, such as Wi-Fi (a wireless networking protocol that devices use to communicate without direct cable connections). In the case of Wi-Fi, the link 11 could be characterized as a wireless link.

Two or more base stations 70 communicate using, e.g., link(s) 79. The link(s) 79 may be wired or wireless or both and may implement, e.g., an Xn interface for fifth generation (5G), an X2 interface for LTE, or other suitable interface for other standards.

The cellular network 1 may include a core network 90, as a third illustrated element or elements, that may include core network functionality, and which provide connectivity via a link or links 81 with a data network 91, such as a telephone network and/or a data communications network (e.g., the Internet). The core network 90 includes one or more processors 93, one or more memories 95, and other circuitry 96. The other circuitry 96 includes one or more receivers (Rx(s)) 97 and one or more transmitters (Tx(s)) 98. A program 92 is used to cause the core network 90 to perform the operations described herein.

The core network 90 could be a 5GC (5G core network). The core network 90 can implement or comprise multiple network functions (NF(s)) 99, and the program 92 may comprise one or more of the NFs 99. A 5G core network may use hardware such as memory and processors and a virtualization layer. It could be a single standalone computing system, a distributed computing system, or a cloud computing system. The NFs 99, as network elements, of the core network could be containers or virtual machines running on the hardware of the computing system(s) making up the core network 90.

Core network functionality for 5G may include access and mobility management functionality that is provided by a network function 99 such as an access and mobility management function (AMF(s)), session management functionality that is provided by a network function such as a session management function (SMF). Core network functionality for access and mobility management in an LTE network may be provided by an MME (Mobility Management Entity) and/or SGW (Serving Gateway) functionality, which routes data to the data network. Many others are possible, as illustrated by the examples in FIG. 24: AMF; SMF; MME; SGW; gateway mobile location center (GMLC); location management functions (LMFs); unified data management (UDM); unified data repository (UDR); network repository function (NRF); and/or evolved serving mobile location center (E-SMLC). These are merely exemplary core network functionality that may be provided by the core network 90, and note that both 5G and LTE core network functionality might be provided by the core network 90. The radio access network (RAN) node 70 is coupled via a backhaul link 31 to the core network 90. The RAN node 70 and the core network 90 may include an NG interface for 5G, or an S1 interface for LTE, or other suitable interface for other radio access technologies for communicating via the backhaul link 31.

In the data network 91, there is a computer-readable medium 94. The computer-readable medium 94 contains instructions that, when downloaded and installed into the memories 15, 75, or 95 of the corresponding LTE 10, base station 70, and/or core network element(s) 90, and executed by processor(s) 13, 73, or 93, cause the respective device to perform corresponding actions described herein. The computer-readable medium 94 may be implemented in other forms, such as via a compact disc or memory stick.

The programs 12, 72, and 92 contain instructions stored by corresponding one or more memories 15, 75, or 95. These instructions, when executed by the corresponding one or more processors 13, 73, or 93, cause the corresponding apparatus 10, 70, or 90, to perform the operations described herein. The computer readable memories 15, 75, or 95 may be of any type suitable to the local technical environment and may be implemented using any suitable data storage technology, such as semiconductor-based memory devices, flash memory, firmware, magnetic memory devices and systems, optical memory devices and systems, fixed memory and removable memory. The computer readable memories 15, 75, and 95 may be means for performing storage functions. The processors 13, 73, and 93, may be of any type suitable to the local technical environment, and may include one or more of general-purpose computers, special purpose computers, microprocessors, digital signal processors (DSPs) and processors based on a multi-core processor architecture, as non-limiting examples. The processors 13, 73, and 93 may be means for causing their respective apparatus to perform functions, such as those described herein.

The receivers 17, 77, and 97, and the transmitters 18, 78, and 98 may implement wired or wireless interfaces. The receivers and transmitters may be grouped together as transceivers.

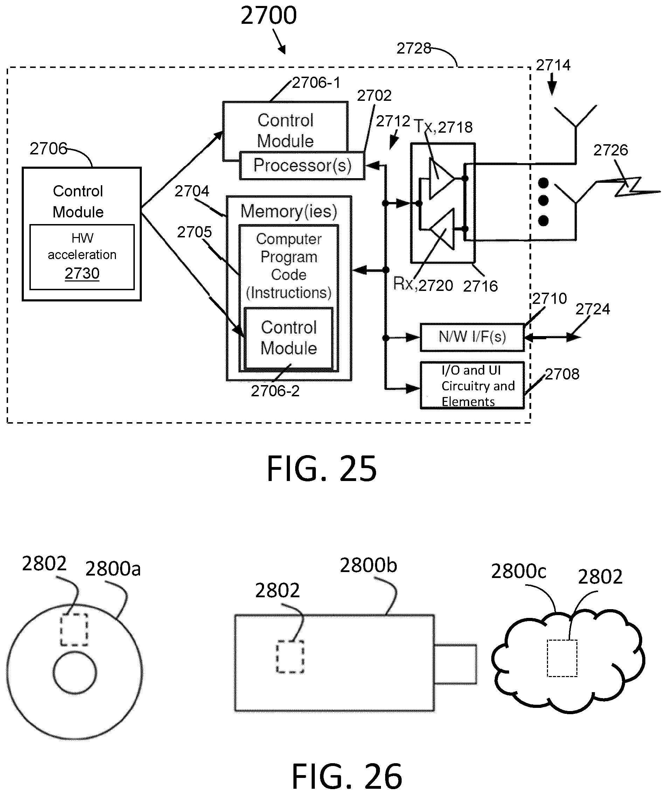

FIG. 25 is an example apparatus 2700, which may be implemented in hardware, configured to implement the examples described herein. The apparatus 2700 comprises at least one processor 2702 (e.g. an FPGA and/or CPU), one or more memories 2704 including computer program code 2705, the computer program code 2705 having instructions to carry out the methods described herein, wherein the at least one memory 2704 and the computer program code 2705 are configured to, with the at least one processor 2702, cause the apparatus 2700 to implement circuitry, a process, component, module, or function (implemented with control module 2706) to implement the examples described herein, a dynamic energy saving controller for machine learning hardware accelerators. The memory 2704 may be a non-transitory memory, a transitory memory, a volatile memory (e.g. RAM), or a non-volatile memory (e.g. ROM). Hardware (HW) acceleration 2730 of the control module implements the herein described aspects related to a dynamic energy saving controller for machine learning hardware accelerators.

The apparatus 2700 includes a display and/or I/O interface 2708, which includes user interface (UI) circuitry and elements, that may be used to display aspects or a status of the methods described herein (e.g., as one of the methods is being performed or at a subsequent time), or to receive input from a user such as with using a keypad, camera, touchscreen, touch area, microphone, biometric recognition, one or more sensors, etc. The apparatus 2700 includes one or more communication e.g. network (N/W) interfaces (I/F(s)) 2710. The communication I/F(s) 2710 may be wired and/or wireless and communicate over the Internet/other network(s) via any communication technique including via one or more links 2724. The link(s) 2724 may be the link(s) 11 and/or 79 and/or 31 and/or 81 from FIG. 24. The link(s) 11 and/or 79 and/or 31 and/or 81 from FIG. 24 may also be implemented using transceiver(s) 2716 and corresponding wireless link(s) 2726. The communication I/F(s) 2710 may comprise one or more transmitters or one or more receivers.

The transceiver 2716 comprises one or more transmitters 2718 and one or more receivers 2720. The transceiver 2716 and/or communication I/F(s) 2710 may comprise standard well-known components such as an amplifier, filter, frequency-converter, (de)modulator, and encoder/decoder circuitries and one or more antennas, such as antennas 2714 used for communication over wireless link 2726.

The control module 2706 of the apparatus 2700 comprises one of or both parts 2706-1 and/or 2706-2, which may be implemented in a number of ways. The control module 2706 may be implemented in hardware as control module 2706-1, such as being implemented as part of the one or more processors 2702. The control module 2706-1 may be implemented also as an integrated circuit or through other hardware such as a programmable gate array. In another example, the control module 2706 may be implemented as control module 2706-2, which is implemented as computer program code (having corresponding instructions) 2705 and is executed by the one or more processors 2702. For instance, the one or more memories 2704 store instructions that, when executed by the one or more processors 2702, cause the apparatus 2700 to perform one or more of the operations as described herein. Furthermore, the one or more processors 2702, the one or more memories 2704, and example algorithms (e.g., as flowcharts and/or signaling diagrams), encoded as instructions, programs, or code, are means for causing performance of the operations described herein.

The apparatus 2700 to implement the functionality of control 2706 may be UE 10, base station 70 (e.g. gNB 70), or core network 90 including any of the network functions 99, which network functions 99 may be implemented with a network entity. Thus, processor 2702 may correspond to processor(s) 13, processor(s) 73 and/or processor(s) 93, memory 2704 may correspond to one or more memories 15, one or more memories 75 and/or one or more memories 95, computer program code 2705 may correspond to program 12, program 72, or program 92, communication I/F(s) 2710 and/or transceiver 2716 may correspond to other circuitry 16, other circuitry 76, or other circuitry 96, and antennas 2714 may correspond to antennas 28 or antennas 58.

Alternatively, apparatus 2700 and its elements may not correspond to either of LTE 10, base station 70, or core network and their respective elements, as apparatus 2700 may be part of a self-organizing/optimizing network (SON) node or other node, such as a node in a cloud.

Apparatus 2700 may correspond to the apparatuses depicted in FIG. 6, FIG. 7, or FIG. 15, or any of the other apparatuses described herein.

The apparatus 2700 may also be distributed throughout the network (e.g. 91) including within and between apparatus 2700 and any network element (such as core network 90 and/or the base station 70 and/or the UE 10).

Interface 2712 enables data communication and signaling between the various items of apparatus 2700, as shown in FIG. 25. For example, the interface 2712 may be one or more buses such as address, data, or control buses, and may include any interconnection mechanism, such as a series of lines on a motherboard or integrated circuit, fiber optics or other optical communication equipment, and the like. Computer program code (e.g. instructions) 2705, including control 2706 may comprise object-oriented software configured to pass data or messages between objects within computer program code 2705, or procedural, functional, or scripting code. The apparatus 2700 need not comprise each of the features mentioned, or may comprise other features as well. The various components of apparatus 2700 may at least partially reside in a common housing 2728, or a subset of the various components of apparatus 2700 may at least partially be located in different housings, which different housings may include housing 2728.

FIG. 26 shows a schematic representation of non-volatile memory media 2800a (e.g. computer/compact disc (CD) or digital versatile disc (DVD)) and 2800b (e.g. universal serial bus (USB) memory stick) and 2800c (e.g. cloud storage for downloading instructions and/or parameters 2802 or receiving emailed instructions and/or parameters 2802) storing instructions and/or parameters 2802 which when executed by a processor allows the processor to perform one or more of the steps of the methods described herein. Instructions and/or parameters 2802 may represent a non-transitory computer readable medium.

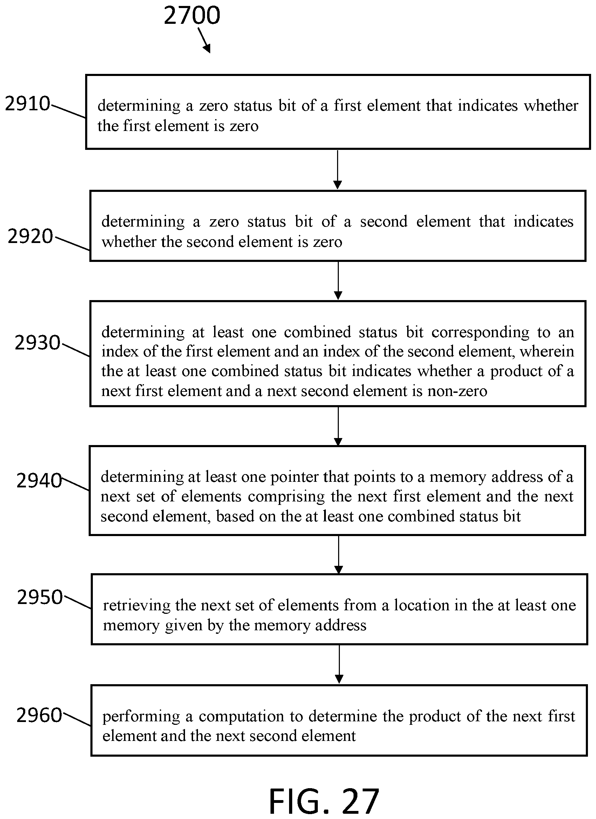

FIG. 27 is an example method 2900, based on the example embodiments described herein. At 2910, the method includes determining a zero status bit of a first element that indicates whether the first element is zero. At 2920, the method includes determining a zero status bit of a second element that indicates whether the second element is zero. At 2930, the method includes determining at least one combined status bit corresponding to an index of the first element and an index of the second element, wherein the at least one combined status bit indicates whether a product of a next first element and a next second element is non-zero. At 2940, the method includes determining at least one pointer that points to a memory address of a next set of elements comprising the next first element and the next second element, based on the at least one combined status bit. At 2950, the method includes retrieving the next set of elements from a location in the at least one memory given by the memory address. At 2960, the method includes performing a computation to determine the product of the next first element and the next second element. Method 2900 may be performed with the apparatus depicted in FIG. 6, the apparatus depicted in FIG. 7, apparatus 1600, or apparatus 2700.

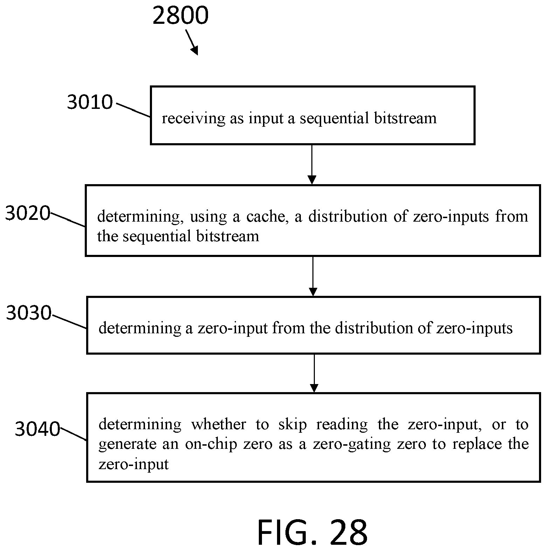

FIG. 28 is an example method 3000, based on the example embodiments described herein. At 3010, the method includes receiving as input a sequential bitstream. At 3020, the method includes determining, using a cache, a distribution of zero-inputs from the sequential bitstream. At 3030, the method includes determining a zero-input from the distribution of zero-inputs. At 3040, the method includes determining whether to skip reading the zero-input, or to generate an on-chip zero as a zero-gating zero to replace the zero-input. Method 3000 may be performed with the apparatus depicted in FIG. 6, the apparatus depicted in FIG. 7, apparatus 1600, or apparatus 2700.

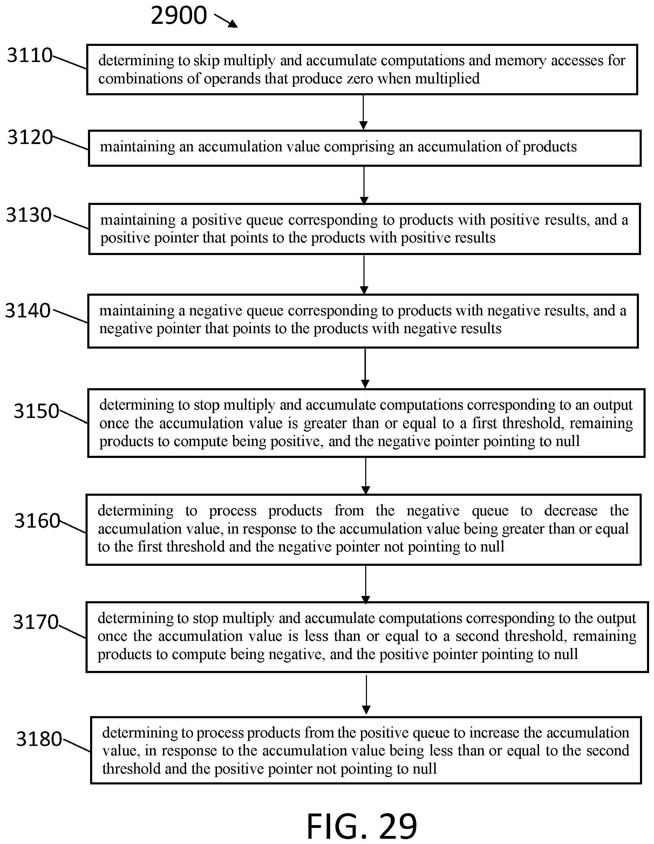

FIG. 29 is an example method 3100, based on the example embodiments described herein. At 3110, the method includes determining to skip multiply and accumulate computations and memory accesses for combinations of operands that produce zero when multiplied. At 3120, the method includes maintaining an accumulation value comprising an accumulation of products. At 3130, the method includes maintaining a positive queue corresponding to products with positive results, and a positive pointer that points to the products with positive results. At 3140, the method includes maintaining a negative queue corresponding to products with negative results, and a negative pointer that points to the products with negative results. At 3150, the method includes determining to stop multiply and accumulate computations corresponding to an output once the accumulation value is greater than or equal to a first threshold, remaining products to compute being positive, and the negative pointer pointing to null. At 3160, the method includes determining to process products from the negative queue to decrease the accumulation value, in response to the accumulation value being greater than or equal to the first threshold and the negative pointer not pointing to null. At 3170, the method includes determining to stop multiply and accumulate computations corresponding to the output once the accumulation value is less than or equal to a second threshold, remaining products to compute being negative, and the positive pointer pointing to null. At 3180, the method includes determining to process products from the positive queue to increase the accumulation value, in response to the accumulation value being less than or equal to the second threshold and the positive pointer not pointing to null. Method 3100 may be performed with the apparatus depicted in FIG. 6, the apparatus depicted in FIG. 7, apparatus 1600, or apparatus 2700.

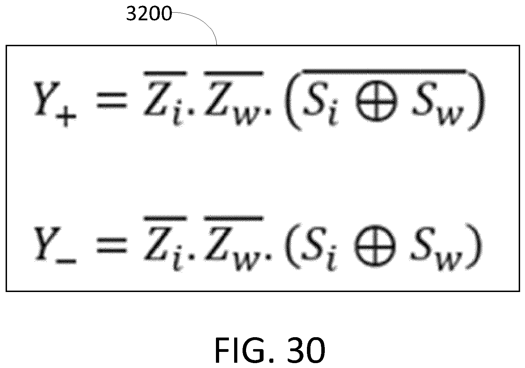

FIG. 30 shows example Boolean logic 3200 used to generate pointers (752, 754) from the loaded status bits, including zero status bits 711 and sign status bits 713. Hardware pointers (752, 754) are constructed by prefetching these status bits (711, 713) and applying specific Boolean logic on them to yield the index of the next useful element in the group to be loaded from memory. To take advantage of feature sparsity, the Boolean block 3200 depicted in FIG. 30 may be implemented inside AGU 750 using the status bits of each activation and weights (Z-zero 711 and 736, S-sign 713 and 738) to generate status register 709. The pointers are generated by the controller from the loaded status bits (711, 713) using the Boolean logic 3200, hardwired or computed. The zero and sign maps are fed to the AGU 750, and Boolean logic 3200 and the status register 709 are in turn used to generate status registers 726 and 728.

In FIG. 30, $Y_+$ corresponds to a positive status register (for example positive status register 726, and $Y_-$ corresponds to a negative status register (for example negative status register 728). $Z_i$ corresponds to a zero activation (702, 711), $Z_w$ corresponds to a zero weight or filter (704, 711), $S_i$ corresponds to a sign activation (702, 713), and $S_w$ corresponds to a sign weight or filter (704, 713).

The following examples are provided and described herein.

Example 1. An apparatus including: means for determining a zero status bit of a first element that indicates whether the first element is zero; means for determining a zero status bit of a second element that indicates whether the second element is zero; means for determining at least one combined status bit corresponding to an index of the first element and an index of the second element, wherein the at least one combined status bit indicates whether a product of a next first element and a next second element is non-zero; means for determining at least one pointer that points to a memory address of a next set of elements comprising the next first element and the next second element, based on the at least one combined status bit; means for retrieving the next set of elements from a location in the at least one memory given by the memory address; and means for performing a computation to determine the product of the next first element and the next second element.

Example 2. The apparatus of example 1, wherein the first element and the next first element are weights of a neural network, and the second element and the next second element are activation inputs of the neural network.

Example 3. The apparatus of any of examples 1 to 2, further including: means for determining a sign status bit of the first element that indicates whether the first element is positive or negative; means for determining a sign status bit of the second element that indicates whether the second element is positive or negative; wherein the at least one combined status bit comprises a positive combined status bit corresponding to the index of the first element and the index of the second element, wherein the positive combined status bit indicates whether the product of the next first element and the next second element is non-zero and positive; wherein the at least one combined status bit comprises a negative combined status bit corresponding to the index of the first element and the index of the second element, wherein the negative combined status bit indicates whether the product of the next first element and the next second element is non-zero and negative; and means for determining the at least one pointer that points to the memory address of the next set of elements comprising the next first element and the next second element, based on the positive combined status bit and the negative combined status bit.

Example 4. The apparatus of example 3, further including: means for determining the positive combined status bit and the negative combined status bit based on a bitwise and operation of the zero status bit of the first element and the zero status bit of the second element, and a bitwise xor operation of the sign status bit of the first element and the sign status bit of the second element.

Example 5. The apparatus of any of examples 3 to 4, further including: means for determining a first pointer that points to a memory address of a next set of elements comprising a first element and a second element that when multiplied is positive, based at least on the positive combined status bit; means for retrieving the next set of elements that when multiplied is positive from a location in the at least one memory given by the memory address; means for performing a computation to determine a product of the first element and the second element that when multiplied is positive; means for determining a second pointer that points to a memory address of a next set of elements comprising a first element and a second element that when multiplied is negative, based at least on the negative combined status bit; means for retrieving the next set of elements that when multiplied is negative from a location in the at least one memory given by the memory address; and means for performing a computation to determine a product of the first element and the second element that when multiplied is negative.

Example 6. The apparatus of example 5, further including: means for dereferencing the first pointer; means for determining whether the first pointer points to null, wherein when the first pointer points to null, there are no more pairs of the next set of elements that when multiplied is positive; means for performing the computation to determine the product of the first element and the second element that when multiplied is positive, in response to the first pointer not pointing to null; and means for determining that there are no more pairs of the next set of elements that when multiplied is positive, in response to the first pointer pointing to null.

Example 7. The apparatus of any of examples 5 to 6, further including: means for dereferencing the second pointer; means for determining whether the second pointer points to null, wherein when the second pointer points to null, there are no more pairs of the next set of elements that when multiplied is negative; means for performing the computation to determine the product of the first element and the second element that when multiplied is negative, in response to the second pointer not pointing to null; and means for determining that there are no more pairs of the next set of elements that when multiplied is negative, in response to the second pointer pointing to null.

Example 8. The apparatus of any of examples 1 to 7, further including: means for determine whether to leverage activation sparsity of a model for which the computation is performed; wherein the at least one combined status bit is determined in response to determining to leverage the activation sparsity of the model for which the computation is performed.

Example 9. The apparatus of any of examples 3 to 8, further including: means for determining whether to leverage activation sparsity and feature sparsity of a model for which the computation is performed; wherein the at least one combined status bit is determined in response to determining to leverage activation sparsity of the model for which the computation is performed; wherein the positive combined status bit and the negative combined status bit are determined in response to determining to leverage feature sparsity of the model for which the computation is performed.

Example 10. The apparatus of any of examples 1 to 9, further including: means for determining whether a status register comprising the at least one combined status bit is empty or below a threshold; means for performing the computation to determine the product of the next first element and the next second element, in response to the status register comprising the at least one combined status bit not being empty or being above the threshold; and means for determining to not perform the computation to determine the product of the next first element and the next second element, in response to the status register comprising the at least one combined status bit not being empty or being below the threshold.

Example 11. The apparatus of any of examples 1 to 10, further including: means for clearing the at least one combined status bit from a status register.

Example 12. The apparatus of any of examples 1 to 11, further including: means for determining the at least one combined status bit, in response to both the first element being non-zero and the second element being non-zero.

Example 13. The apparatus of any of examples 1 to 12, further including: means for determining to skip multiply and accumulate computations and memory accesses for combinations of operands that produce zero when multiplied; means for maintaining an accumulation value comprising an accumulation of products; means for maintaining a positive queue corresponding to products that, when computed, gives positive results, and a positive pointer that points to the products with positive results; means for maintaining a negative queue corresponding to products that, when computed, gives negative results, and a negative pointer that points to the products with negative results; means for determining to stop multiply and accumulate computations corresponding to an output once the accumulation value is greater than or equal to a first threshold, remaining products to compute being positive, and the negative pointer pointing to null; means for determining to process products from the negative queue to decrease the accumulation value, in response to the accumulation value being greater than or equal to the first threshold and the negative pointer not pointing to null; means for determining to stop multiply and accumulate computations corresponding to the output once the accumulation value is less than or equal to a second threshold, remaining products to compute being negative, and the positive pointer pointing to null; and means for determining to process products from the positive queue to increase the accumulation value, in response to the accumulation value being less than or equal to the second threshold and the positive pointer not pointing to null.

Example 14. An apparatus including: means for receiving as input a sequential bitstream; means for determining, using a cache, a distribution of zero-inputs from the sequential bitstream; means for determining a zero-input from the distribution of zero-inputs; and means for determining whether to skip reading the zero-input, or to generate an on-chip zero as a zero-gating zero to replace the zero-input.

Example 15. The apparatus of example 14, wherein generating the on-chip zero is performed without reading a full precision zero from an off-chip dynamic random access memory.

Example 16. The apparatus of any of examples 14 to 15, further including: means for determining to generate the on-chip zero as a zero-gating zero to replace the zero-input, in response to the zero-input following a non-zero input and preceding a non-zero input; and means for determining to generate a plurality of on-chip zeros for more parallelism.

Example 17. The apparatus of any of examples 14 to 16, further including: means for selecting, using a multiplexer, an output of a first processing element; and means for processing, using a memory of a convolution accelerator, an output of an accumulator of a second processing element and the selected output of the first processing element to generate a looped input to the first processing element.

Example 18. The apparatus of any of examples 14 to 17, wherein the distribution of zero-inputs comprise weight and activation inputs of a neural network.

Example 19. An apparatus including: means for determining to skip multiply and accumulate computations and memory accesses for combinations of operands that produce zero when multiplied; means for maintaining an accumulation value comprising an accumulation of products; means for maintaining a positive queue corresponding to products with positive results, and a positive pointer that points to the products with positive results; means for maintaining a negative queue corresponding to products with negative results, and a negative pointer that points to the products with negative results; means for determining to stop multiply and accumulate computations corresponding to an output once the accumulation value is greater than or equal to a first threshold, remaining products to compute being positive, and the negative pointer pointing to null; means for determining to process products from the negative queue to decrease the accumulation value, in response to the accumulation value being greater than or equal to the first threshold and the negative pointer not pointing to null; means for determining to stop multiply and accumulate computations corresponding to the output once the accumulation value is less than or equal to a second threshold, remaining products to compute being negative, and the positive pointer pointing to null; and means for determining to process products from the positive queue to increase the accumulation value, in response to the accumulation value being less than or equal to the second threshold and the positive pointer not pointing to null.

Example 20. The apparatus of example 19, further including: means for determining to not overwrite output memory locations with zeros, and instead to set a corresponding zero status bit used to indicate whether an operand is zero.

Example 21. The apparatus of any of examples 19 to 20, wherein: the first threshold comprises a maximum representable number; and the second threshold comprises a minimum representable number, or the second threshold comprises zero when the multiply and accumulate computations are associated with a rectified linear unit.

Example 22. An apparatus including: at least one processor; and at least one memory storing instructions that, when executed by the at least one processor, cause the apparatus at least to: determine a zero status bit of a first element that indicates whether the first element is zero; determine a zero status bit of a second element that indicates whether the second element is zero; determine at least one combined status bit corresponding to an index of the first element and an index of the second element, wherein the at least one combined status bit indicates whether a product of a next first element and a next second element is non-zero; determine at least one pointer that points to a memory address of a next set of elements comprising the next first element and the next second element, based on the at least one combined status bit; retrieve the next set of elements from a location in the at least one memory given by the memory address; and perform a computation to determine the product of the next first element and the next second element.

Example 23. An apparatus including: at least one processor; and at least one memory storing instructions that, when executed by the at least one processor, cause the apparatus at least to: receive as input a sequential bitstream; determine, using a cache, a distribution of zero-inputs from the sequential bitstream; determine a zero-input from the distribution of zero-inputs; and determine whether to skip reading the zero-input, or to generate an on-chip zero as a zero-gating zero to replace the zero-input.

Example 24. An apparatus including: at least one processor; and at least one memory storing instructions that, when executed by the at least one processor, cause the apparatus at least to: determine to skip multiply and accumulate computations and memory accesses for combinations of operands that produce zero when multiplied; maintain an accumulation value comprising an accumulation of products; maintain a positive queue corresponding to products with positive results, and a positive pointer that points to the products with positive results; maintain a negative queue corresponding to products with negative results, and a negative pointer that points to the products with negative results; determine to stop multiply and accumulate computations corresponding to an output once the accumulation value is greater than or equal to a first threshold, remaining products to compute being positive, and the negative pointer pointing to null; determine to process products from the negative queue to decrease the accumulation value, in response to the accumulation value being greater than or equal to the first threshold and the negative pointer not pointing to null; determine to stop multiply and accumulate computations corresponding to the output once the accumulation value is less than or equal to a second threshold, remaining products to compute being negative, and the positive pointer pointing to null; and determine to process products from the positive queue to increase the accumulation value, in response to the accumulation value being less than or equal to the second threshold and the positive pointer not pointing to null.

Example 25. A method including: determining a zero status bit of a first element that indicates whether the first element is zero; determining a zero status bit of a second element that indicates whether the second element is zero; determining at least one combined status bit corresponding to an index of the first element and an index of the second element, wherein the at least one combined status bit indicates whether a product of a next first element and a next second element is non-zero; determining at least one pointer that points to a memory address of a next set of elements comprising the next first element and the next second element, based on the at least one combined status bit; retrieving the next set of elements from a location in the at least one memory given by the memory address; and performing a computation to determine the product of the next first element and the next second element.

Example 26. A method including: receiving as input a sequential bitstream; determining, using a cache, a distribution of zero-inputs from the sequential bitstream; determining a zero-input from the distribution of zero-inputs; and determining whether to skip reading the zero-input, or to generate an on-chip zero as a zero-gating zero to replace the zero-input.

Example 27. A method including: determining to skip multiply and accumulate computations and memory accesses for combinations of operands that produce zero when multiplied; maintaining an accumulation value comprising an accumulation of products; maintaining a positive queue corresponding to products with positive results, and a positive pointer that points to the products with positive results; maintaining a negative queue corresponding to products with negative results, and a negative pointer that points to the products with negative results; determining to stop multiply and accumulate computations corresponding to an output once the accumulation value is greater than or equal to a first threshold, remaining products to compute being positive, and the negative pointer pointing to null; determining to process products from the negative queue to decrease the accumulation value, in response to the accumulation value being greater than or equal to the first threshold and the negative pointer not pointing to null; determining to stop multiply and accumulate computations corresponding to the output once the accumulation value is less than or equal to a second threshold, remaining products to compute being negative, and the positive pointer pointing to null; and determining to process products from the positive queue to increase the accumulation value, in response to the accumulation value being less than or equal to the second threshold and the positive pointer not pointing to null.

Example 28. A computer readable medium including instructions stored thereon for performing at least the following: determining a zero status bit of a first element that indicates whether the first element is zero; determining a zero status bit of a second element that indicates whether the second element is zero; determining at least one combined status bit corresponding to an index of the first element and an index of the second element, wherein the at least one combined status bit indicates whether a product of a next first element and a next second element is non-zero; determining at least one pointer that points to a memory address of a next set of elements comprising the next first element and the next second element, based on the at least one combined status bit; retrieving the next set of elements from a location in the at least one memory given by the memory address; and performing a computation to determine the product of the next first element and the next second element.

Example 29. A computer readable medium including instructions stored thereon for performing at least the following: receiving as input a sequential bitstream; determining, using a cache, a distribution of zero-inputs from the sequential bitstream; determining a zero-input from the distribution of zero-inputs; and determining whether to skip reading the zero-input, or to generate an on-chip zero as a zero-gating zero to replace the zero-input.

Example 30. A computer readable medium including instructions stored thereon for performing at least the following: determining to skip multiply and accumulate computations and memory accesses for combinations of operands that produce zero when multiplied; maintaining an accumulation value comprising an accumulation of products; maintaining a positive queue corresponding to products with positive results, and a positive pointer that points to the products with positive results; maintaining a negative queue corresponding to products with negative results, and a negative pointer that points to the products with negative results; determining to stop multiply and accumulate computations corresponding to an output once the accumulation value is greater than or equal to a first threshold, remaining products to compute being positive, and the negative pointer pointing to null; determining to process products from the negative queue to decrease the accumulation value, in response to the accumulation value being greater than or equal to the first threshold and the negative pointer not pointing to null; determining to stop multiply and accumulate computations corresponding to the output once the accumulation value is less than or equal to a second threshold, remaining products to compute being negative, and the positive pointer pointing to null; and determining to process products from the positive queue to increase the accumulation value, in response to the accumulation value being less than or equal to the second threshold and the positive pointer not pointing to null.

References to a 'computer', 'processor', etc. should be understood to encompass not only computers having different architectures such as single/multi-processor architectures and sequential or parallel architectures but also specialized circuits such as field-programmable gate arrays (FPGAs), application specific circuits (ASICs), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

The memories as described herein may be implemented using any suitable data storage technology, such as semiconductor based memory devices, flash memory, magnetic memory devices and systems, optical memory devices and systems, non-transitory memory, transitory memory, fixed memory and removable memory. The memories may comprise a database for storing data.

As used herein, the term 'circuitry' may refer to the following: (a) hardware circuit implementations, such as implementations in analog and/or digital circuitry, and (b) combinations of circuits and software (and/or firmware), such as (as applicable): (i) a combination of processor(s) or (ii) portions of processor(s)/software including digital signal processor(s), software, and memories that work together to cause an apparatus to perform various functions, and (c) circuits, such as a microprocessor(s) or a portion of a microprocessor(s), that require software or firmware for operation, even if the software or firmware is not physically present. As a further example, as used herein, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

It should be understood that the foregoing description is only illustrative. Various alternatives and modifications may be devised by those skilled in the art. For example, features recited in the various dependent claims could be combined with each other in any suitable combination(s). In addition, features from different example embodiments described above could be selectively combined into a new example embodiment. Accordingly, this description is intended to embrace all such alternatives, modifications and variances which fall within the scope of the appended claims.

The following acronyms and abbreviations that may be found in the specification and/or the drawing figures are given as follows (the abbreviations and acronyms may be appended with each other or with other characters using e.g. a dash, hyphen, slash, or number, and may be case insensitive):

| | |
|---|---|
| 0D, 0-D | zero dimensional |
| 1D, 1-D | one dimensional |
| 2D, 2-D | two dimensional |
| 3D, 3-D | three dimensional |
| 4G | fourth generation |
| 5G | fifth generation |
| 5GC | 5G core network |
| 6G | sixth generation |
| AC | accumulate or accumulation |
| ACC | accumulate |
| ACCUM | accumulate or accumulation |
| ADDR | address |
| AGU | address generation unit |
| AI | artificial intelligence |
| ALU | arithmetic logic unit |
| AMF | access and mobility management function |
| ASIC | application-specific integrated circuit |
| C | convolution (for example, 3-by-3-by-C) |
| CC | clock cycle |
| CD | compact/computer disc |
| CNN | convolutional neural network |
| conv | convolution |
| CPU | central processing unit |
| CU | compute unit |
| Cyc | cycle |
| DNN | deep neural network |
| DRAM | dynamic random-access memory |
| DSP | digital signal processor |
| DVD | digital versatile disc |
| eNB | evolved Node B (e.g., an LTE base station) |
| EPC | evolved packet core |
| E-SMLC | evolved serving mobile location center |

| | |
|---|---|
| FPGA | field-programmable gate array |
| FSM | finite state machine |
| GEQ | greater or equal |
| GEN | generation |
| GMLC | gateway mobile location center |
| gNB | next generation node B, base station for 5G/NR, i.e., a node providing NR user plane and control plane protocol terminations towards the UE, and connected via the NG interface to the 5GC |
| GPU | graphics processing unit |
| HW | hardware |
| I | input |
| I/F | interface |
| INTMAX | maximum representable number |
| I/O, IO | input/output |
| IP | internet protocol |
| LEQ | less or equal |
| L1 | layer 1 |
| LMF | location management function |
| LSB | least significant bit |
| LTE | long term evolution (4G) |
| MAC | multiply-accumulate |
| maxInt | maximum representable number |
| minInt | minimum representable number |
| ML | machine learning |
| MME | mobility management entity |
| MSB | most significant bit |
| MUL | multiply |
| MULT | multiply |
| NF | network function |
| NN | neural network |
| NG | new generation |
| NG-RAN | new generation radio access network |
| NN | neural network |
| NOOP | no-operation |
| NPU | neural processing unit |
| NR | new radio |
| NRF | network repository function |
| N/W | network |
| ops | operations |
| PE | processing element |
| PTR | pointer |
| R | register |
| RAM | random access memory |
| RAN | radio access network |
| Reg | register |
| ReLU | rectified linear unit |
| ResNet | residual neural network |
| ROM | read-only memory |
| Rx | receiver or reception |
| S | sign |
| S1 | interface connecting the eNB to the EPC (different from S1 1626) |
| SGW | serving gateway |
| SIMD | single instructions multiple data |
| SIMT | single instruction multiple thread |
| SMF | session management function |
| SON | self-organizing/optimizing network |
| SRAM | static random access memory |
| SW | software |
| TPU | tensor processing unit |

| TRP | transmission reception point |
| Tx | transmitter or transmission |
| UDM | unified data management |
| UDR | unified data repository |
| UE | user equipment (e.g., a wireless, typically mobile device) |
| UI | user interface |
| UPF | user plane function |
| USB | universal serial bus |
| W | weight |
| Wi-Fi | wireless networking protocol that devices use to communicate without direct cable connections |
| X2 | network interface between RAN nodes and between RAN and the core network |
| Xn | network interface between NG-RAN nodes |
| XOR | exclusive or |
| Z | zero |
| ZG | zero gating |
| ZS | zero skipping |

**Claims**

1. An apparatus comprising:

   means for determining a zero status bit of a first element that indicates whether the first element is zero;
   means for determining a zero status bit of a second element that indicates whether the second element is zero;
   means for determining at least one combined status bit corresponding to an index of the first element and an index of the second element, wherein the at least one combined status bit indicates whether a product of a next first element and a next second element is non-zero;
   means for determining at least one pointer that points to a memory address of a next set of elements comprising the next first element and the next second element, based on the at least one combined status bit;
   means for retrieving the next set of elements from a location in the at least one memory given by the memory address; and
   means for performing a computation to determine the product of the next first element and the next second element.

2. The apparatus of claim 1, wherein the first element and the next first element are weights of a neural network, and the second element and the next second element are activation inputs of the neural network.

3. The apparatus of any of claims 1 to 2, further comprising:

   means for determining a sign status bit of the first element that indicates whether the first element is positive or negative;
   means for determining a sign status bit of the second element that indicates whether the second element is positive or negative;
   wherein the at least one combined status bit comprises a positive combined status bit corresponding to the index of the first element and the index of the second element, wherein the positive combined status bit indicates whether the product of the next first element and the next second element is non-zero and positive;
   wherein the at least one combined status bit comprises a negative combined status bit corresponding to the index of the first element and the index of the second element, wherein the negative combined status bit indicates whether the product of the next first element and the next second element is non-zero and negative; and
   means for determining the at least one pointer that points to the memory address of the next set of elements comprising the next first element and the next second element, based on the positive combined status bit and the negative combined status bit.

4. The apparatus of claim 3, further comprising:
   means for determining the positive combined status bit and the negative combined status bit based on a bitwise and operation of the zero status bit of the first element and the zero status bit of the second element, and a bitwise xor operation of the sign status bit of the first element and the sign status bit of the second element.

5. The apparatus of any of claims 3 to 4, further comprising:

means for determining a first pointer that points to a memory address of a next set of elements comprising a first element and a second element that when multiplied is positive, based at least on the positive combined status bit;
means for retrieving the next set of elements that when multiplied is positive from a location in the at least one memory given by the memory address;
means for performing a computation to determine a product of the first element and the second element that when multiplied is positive;
means for determining a second pointer that points to a memory address of a next set of elements comprising a first element and a second element that when multiplied is negative, based at least on the negative combined status bit;
means for retrieving the next set of elements that when multiplied is negative from a location in the at least one memory given by the memory address; and
means for performing a computation to determine a product of the first element and the second element that when multiplied is negative.

6. The apparatus of claim 5, further comprising:

means for dereferencing the first pointer;
means for determining whether the first pointer points to null, wherein when the first pointer points to null, there are no more pairs of the next set of elements that when multiplied is positive;
means for performing the computation to determine the product of the first element and the second element that when multiplied is positive, in response to the first pointer not pointing to null; and
means for determining that there are no more pairs of the next set of elements that when multiplied is positive, in response to the first pointer pointing to null.

7. The apparatus of any of claims 5 to 6, further comprising:

means for dereferencing the second pointer;
means for determining whether the second pointer points to null, wherein when the second pointer points to null, there are no more pairs of the next set of elements that when multiplied is negative;
means for performing the computation to determine the product of the first element and the second element that when multiplied is negative, in response to the second pointer not pointing to null; and
means for determining that there are no more pairs of the next set of elements that when multiplied is negative, in response to the second pointer pointing to null.

8. The apparatus of any of claims 1 to 7, further comprising:

means for determine whether to leverage activation sparsity of a model for which the computation is performed;
wherein the at least one combined status bit is determined in response to determining to leverage the activation sparsity of the model for which the computation is performed.

9. The apparatus of any of claims 3 to 8, further comprising:

means for determining whether to leverage activation sparsity and feature sparsity of a model for which the computation is performed;
wherein the at least one combined status bit is determined in response to determining to leverage activation sparsity of the model for which the computation is performed;
wherein the positive combined status bit and the negative combined status bit are determined in response to determining to leverage feature sparsity of the model for which the computation is performed.

10. The apparatus of any of claims 1 to 9, further comprising:

means for determining whether a status register comprising the at least one combined status bit is empty or below a threshold;
means for performing the computation to determine the product of the next first element and the next second element, in response to the status register comprising the at least one combined status bit not being empty or being above the threshold; and
means for determining to not perform the computation to determine the product of the next first element and the next second element, in response to the status register comprising the at least one combined status bit not being empty or being below the threshold.

11. The apparatus of any of claims 1 to 10, further comprising:
means for clearing the at least one combined status bit from a status register.

12. The apparatus of any of claims 1 to 11, further comprising:
means for determining the at least one combined status bit, in response to both the first element being non-zero and the second element being non-zero.

13. The apparatus of any of claims 1 to 12, further comprising:

means for determining to skip multiply and accumulate computations and memory accesses for combinations of operands that produce zero when multiplied;
means for maintaining an accumulation value comprising an accumulation of products;
means for maintaining a positive queue corresponding to products that, when computed, gives positive results, and a positive pointer that points to the products with positive results;
means for maintaining a negative queue corresponding to products that, when computed, gives negative results, and a negative pointer that points to the products with negative results;
means for determining to stop multiply and accumulate computations corresponding to an output once the accumulation value is greater than or equal to a first threshold, remaining products to compute being positive, and the negative pointer pointing to null;
means for determining to process products from the negative queue to decrease the accumulation value, in response to the accumulation value being greater than or equal to the first threshold and the negative pointer not pointing to null;
means for determining to stop multiply and accumulate computations corresponding to the output once the accumulation value is less than or equal to a second threshold, remaining products to compute being negative, and the positive pointer pointing to null; and
means for determining to process products from the positive queue to increase the accumulation value, in response to the accumulation value being less than or equal to the second threshold and the positive pointer not pointing to null.

14. An apparatus comprising:

means for receiving as input a sequential bitstream;
means for determining, using a cache, a distribution of zero-inputs from the sequential bitstream;
means for determining a zero-input from the distribution of zero-inputs; and
means for determining whether to skip reading the zero-input, or to generate an on-chip zero as a zero-gating zero to replace the zero-input.

15. The apparatus of claim 14, wherein generating the on-chip zero is performed without reading a full precision zero from an off-chip dynamic random access memory.

16. The apparatus of any of claims 14 to 15, further comprising:

means for determining to generate the on-chip zero as a zero-gating zero to replace the zero-input, in response to the zero-input following a non-zero input and preceding a non-zero input; and
means for determining to generate a plurality of on-chip zeros for more parallelism.

17. The apparatus of any of claims 14 to 16, further comprising:

means for selecting, using a multiplexer, an output of a first processing element; and
means for processing, using a memory of a convolution accelerator, an output of an accumulator of a second processing element and the selected output of the first processing element to generate a looped input to the first processing element.

18. The apparatus of any of claims 14 to 17, wherein the distribution of zero-inputs comprise weight and activation inputs of a neural network.

19. An apparatus comprising:

means for determining to skip multiply and accumulate computations and memory accesses for combinations of operands that produce zero when multiplied;

means for maintaining an accumulation value comprising an accumulation of products;

means for maintaining a positive queue corresponding to products with positive results, and a positive pointer that points to the products with positive results;

means for maintaining a negative queue corresponding to products with negative results, and a negative pointer that points to the products with negative results;

means for determining to stop multiply and accumulate computations corresponding to an output once the accumulation value is greater than or equal to a first threshold, remaining products to compute being positive, and the negative pointer pointing to null;

means for determining to process products from the negative queue to decrease the accumulation value, in response to the accumulation value being greater than or equal to the first threshold and the negative pointer not pointing to null;

means for determining to stop multiply and accumulate computations corresponding to the output once the accumulation value is less than or equal to a second threshold, remaining products to compute being negative, and the positive pointer pointing to null; and

means for determining to process products from the positive queue to increase the accumulation value, in response to the accumulation value being less than or equal to the second threshold and the positive pointer not pointing to null.

20. The apparatus of claim 19, further comprising:
means for determining to not overwrite output memory locations with zeros, and instead to set a corresponding zero status bit used to indicate whether an operand is zero.

21. The apparatus of any of claims 19 to 20, wherein:

the first threshold comprises a maximum representable number; and

the second threshold comprises a minimum representable number, or the second threshold comprises zero when the multiply and accumulate computations are associated with a rectified linear unit.

**Deep neural network** 101

110 Input layer

Multiple hidden layers 115

120 Output layer

103

102

FIG. 1

EP 4 571 584 A1

FIG. 2

FIG. 3

EP 4 571 584 A1

FIG. 4

zero gating      510

| $A_0$ | 0 | $A_2$ | 0 | 0 | 0 | $A_6$ | $A_7$ |
|---|---|---|---|---|---|---|---|

$t_0$  $t_1$  $t_2$  $t_3$  $t_4$  $t_5$  $t_6$  $t_7$

zero skipping    520

| $A_0$ | 0 | $A_2$ | 0 | 0 | 0 | $A_6$ | $A_7$ |
|---|---|---|---|---|---|---|---|

$t_0$     $t_1$     $t_2$  $t_3$

# FIG. 5

FIG. 6

FIG. 7

FIG. 8

**1052**

**1040**

**1050**

**1056**

**1051**

**1054**

| 0.2245 | 0.2619 | 0.2993 |
|--------|--------|--------|
| 0.2245 | 0.2245 | 0.2245 |
| 0.1496 | 0.1496 | 0.1870 |

★

| -0.3136 | -0.2539 | -0.1225 |
|---------|---------|---------|
| -0.0060 | -0.1254 | -0.1254 |
| 0.1912  | 0.1135  | -0.0239 |

**=**

| 0.1812 |
|--------|

**1060**

| + |
|---|
| a[7,5]*w[2,0] = 0.2860 |
| a[7,6] * w[2,1] = 0.0170 |
| a[7,7] * w[2,2] = 0.0045 |
| |
| |
| |

• • •

**1062**

| - |
|---|
| a[5,5] * w[0,0] = -0.0704 |
| a[5,6] * w[0,1] = -0.0665 |
| a[5,7] * w[0,2] = -0.0367 |
| a[6,6] * w[1,1] = 0.0282 |
| a[6,7] * w[1,2] = -0.0282 |
| a[6,5] * w[1,0] = -0.0013 |

• • •

**1063**

**1064**

| + |
|---|
| NULL |

**1066**

| - |
|---|
| |

**1068**
Accumulator

| -0.0203 |
|---------|

**1080**
Threshold

| min int |
|---------|
| max int |

**1072**

**1074**

# FIG. 9

FIG. 10

EP 4 571 584 A1

FIG. 11

EP 4 571 584 A1

1302 ( Start )

1304 Read status bits for weights and activations

1308 Combine status map bits (Cz)

1310 are all pairs checked? — no

yes

1312 Cz=NULL? — no

yes

1316 Decode index into memory address, advance Cz

1318 load activation

1320 sync weights if needed

1314 MAC

1313 Set output status bits

1322 Store output value(s) and status bits, as needed

1324 Finished compute? — no

1330 yes

( End )

FIG. 12

1402 ( Start )

1404 / Read status bits for weights and activations (as needed) /

1406 | Combine status map bits |

1408 | Populate the Y+ and Y. lists |

1410 < Y+ = NULL? > —no→ 1412 < AC > MaxInt >

1412 —no→ 1414 | decode index into memory address, advance Y+ |

1410 —yes← (from 1412 yes)

1410 yes ↓

1420 < Y- = NULL? > —no→ 1422 < AC < MinInt >

1422 —no→ 1424 | decode index into memory address, advance Y+ |

1420 —yes← (from 1422 yes)

1420 yes ↓

1430 | Set status bit based on the MAC output value |

1426 / load corresponding data if not available locally /

1428 | MAC |

1432 / Store output value(s) and corresponding status bit(s) /

1434 < Finished compute? > —no→

1440 yes ↓ ( End )

# FIG. 13

EP 4 571 584 A1

1502       1504       1510       1512

```
Convolution        Activation         Convolution        Activation
   N-1                N-1                  N                  N
```

1506

```
Bit-map
 Cache
```

1508

```
  Zero
Scheduler
```

FIG. 14

1600

1603

FIG. 15

EP 4 571 584 A1

| | | | | | | | | | 1712 Delay 2CC | 1714 Delay 1CC | 1716 Delay 0CC | |
|---|---|---|---|---|---|---|---|---|---|---|---|---|
| CC | INPUT | R0 | R1 | R2 | #0 MUL | #1 MUL | #2 MUL | Feedback | | | | Partial Sum |
| 1 | x(0,0) | w(0,0) | w(0,1) | w(0,2) | w(0,0)*x(0,0) | w(0,1)*x(0,0) | w(0,2)*x(0,0) | | | | w(0,2)*x(0,0) | |
| 2 | x(0,1) | w(0,0) | w(0,1) | w(0,2) | w(0,0)*x(0,1) | w(0,1)*x(0,1) | w(0,2)*x(0,1) | | | w(0,1)*x(0,0) | w(0,2)*x(0,1) | |
| 3 | x(0,2) | w(0,0) | w(0,1) | w(0,2) | w(0,0)*x(0,2) | w(0,1)*x(0,2) | w(0,2)*x(0,2) | | w(0,0)*x(0,0) | w(0,1)*x(0,1) | w(0,2)*x(0,2) | y(0,0) |
| 4 | x(0,3) | w(0,0) | w(0,1) | w(0,2) | w(0,0)*x(0,3) | w(0,1)*x(0,3) | w(0,2)*x(0,3) | | w(0,0)*x(0,1) | w(0,1)*x(0,2) | w(0,2)*x(0,3) | y(0,1) |
| 5 | x(0,4) | w(0,0) | w(0,1) | w(0,2) | w(0,0)*x(0,4) | w(0,1)*x(0,4) | w(0,2)*x(0,4) | | w(0,0)*x(0,2) | w(0,1)*x(0,3) | w(0,2)*x(0,4) | y(0,2) |
| 17 | x(2,4) | w(0,0) | w(0,1) | w(0,2) | w(0,0)*x(2,4) | w(0,1)*x(2,4) | w(0,2)*x(2,4) | | w(0,0)*x(2,2) | w(0,1)*x(2,3) | w(0,2)*x(2,4) | y(2,2) |
| 18 | x(2,5) | w(0,0) | w(0,1) | w(0,2) | w(0,0)*x(2,5) | w(0,1)*x(2,5) | w(0,2)*x(2,5) | | w(0,0)*x(2,3) | w(0,1)*x(2,4) | w(0,2)*x(2,5) | y(2,3) |
| 19 | x(1,0) | w(1,0) | w(1,1) | w(1,2) | w(1,0)*x(1,0) | w(1,1)*x(1,0) | w(1,2)*x(1,0) | | w(0,0)*x(2,4) | w(0,1)*x(2,5) | w(1,2)*x(1,0) | y(2,4) |
| 20 | x(1,1) | w(1,0) | w(1,1) | w(1,2) | w(1,0)*x(1,1) | w(1,1)*x(1,1) | w(1,2)*x(1,1) | | w(0,0)*x(2,5) | w(1,1)*x(1,0) | w(1,2)*x(1,1) | y(2,5) |
| 21 | x(1,2) | w(1,0) | w(1,1) | w(1,2) | w(1,0)*x(1,2) | w(1,1)*x(1,2) | w(1,2)*x(1,2) | y(0,0) | w(1,0)*x(1,0) | w(1,1)*x(1,1) | w(1,2)*x(1,2) | y(0,0) |

1720 1722 1724 1726

Direction of accumulation

## FIG. 16

|  |  | 1812 |  | 1814 |  | 1816 |  |  |
|---|---|---|---|---|---|---|---|---|
|  |  |  |  |  |  | 1 |  |  |
|  |  |  |  | 1 |  | 2 |  |  |
| **1802** | | 1 |  | 2 |  | 0 |  | y(0,0) |
| **influence** | | 2 |  | 0 |  | 3 |  | y(0,1) |
| **field** | | 0 |  | 3 |  | 4 |  | y(0,2) |
| **accumulation** | | 3 |  | 4 |  | 5 |  |  |
| **direction** | | 4 |  | 5 |  | 6 |  |  |
|  |  | 5 |  | 6 |  |  |  |  |
|  |  | 6 |  |  |  |  |  |  |

|  |  |  |  |  | | |
|---|---|---|---|---|---|---|
|  |  | 1 |  |  | | |
|  | 1 | 2 |  |  | | |
| 1 | 2 | 3 |  | y(0,0) | | |
| 2 | 3 | 4 |  | y(0,1) | y(0,2) | |
| 3 | 4 | 5 |  |  | | |
| 4 | 5 | 6 |  |  | | |
| 5 | 6 |  |  |  | | |
| 6 |  |  |  |  | | |

**1804 influence field**

# FIG. 17

EP 4 571 584 A1

|  | 1902 | | 1904 | 1906 |
|---|---|---|---|---|

No influence

|  | 1902 | 1904 | 1906 |
|---|---|---|---|
|  |  |  | 1 |
|  |  | 1 | 2 |
|  | 1 | 2 | 0 |
|  | 2 | 0 | 3 |
|  | 0 | 3 | 4 |
|  | 3 | 4 | 0 |
|  | 4 | 0 | 5 |
|  | 0 | 5 | 6 |
|  | 5 | 6 |  |
|  | 6 |  |  |

FIG. 18

44

Zero-Skipping : Case 2 Sequence of "0"

| | | 1 | | | | 1 | | | | 1 |
|---|---|---|---|---|---|---|---|---|---|---|
| | 1 | 2 | | | 1 | 2 | | | 1 | 2 |
| 1 | 2 | 0 | | 1 | 2 | 0 | | 1 | 2 | 0 |
| 2 | 0 | 0 | | 2 | 0 | 0 | | 2 | 0 | 0 |
| 0 | 0 | 3 | | 0 | 0 | 0 | | 0 | 0 | 0 |
| 0 | 3 | 4 | | 0 | 0 | 3 | | 0 | 0 | 0 |
| 3 | 4 | 5 | | 0 | 3 | 4 | | 0 | 0 | 3 |
| 4 | 5 | | | 3 | 4 | | | 0 | 3 | 4 |
| 5 | | | | 4 | | | | 3 | 4 | |
| | | | | | | | | 4 | | |

FIG. 19

EP 4 571 584 A1

Zero-Skipping: Case 3 Two "0" Separated by 1CC

| 2122 | 2124 | 2126 |
|---|---|---|
|  |  | 1 |
|  | 1 | 2 |
| 1 | 2 | 0 |
| 2 | 0 | 3 |
| 0 | 3 | 0 |
| 3 | 0 | 4 |
| 0 | 4 | 0 |
| 4 | 0 | 0 |
| 0 | 0 | 5 |
| 0 | 5 | 6 |
| 5 | 6 |  |
| 6 |  |  |

2106
2104
2116
2114
2102
2112

FIG. 20

# Novel Architecture
## Mixed Zero-Gating & Zero-Skipping

| 2222 | 2224 | 2226 |
|---|---|---|
|  |  | 1 |
|  | 1 | 2 |
| 1 | 2 | 0 |
| 2 | 0 | 3 |
| 0 | 3 | 4-ZG |
| 3 | 4-ZG | 5 |
| 4-ZG | 5 | 0 |
| 5 | 0 | 0 |
| 0 | 0 | 6 |
| 0 | 6 | 7 |
| 6 | 7 |  |
| 7 |  |  |

Labels: 2206, 2204, 2236, 2216, 2214, 2234, 2202, 2232, 2212

## FIG. 21

|   |   | 1 |
|---|---|---|
|   | 1 | 2 |
| 1 | 2 | 3 |
| 3 | 4 | 6 |
| 4 | 6 | 7 |
| 6 | 7 | 8 |
| 7 | 8 |   |
| 8 |   |   |

# FIG. 22

| CC | Delay 2CC | Delay 1 CC | Delay 0 CC |
|---|---|---|---|
| 0 | | | 1 |
| 1 | | 1 | 2 |
| 2 | 1 | 2 | 0 |
| 3 | 2 | 0 | 3 |
| 4 | 0 | 3 | 0 |
| 5 | 3 | 0 | 5 |
| 6 | 0 | 5 | 0 |
| 7 | 5 | 0 | 6 |
| 8 | 0 | 6 | 7 |
| 9 | 6 | 7 | 8 |
| 10 | 7 | 8 | 9 |
| 11 | 8 | 9 | 10 |
| 12 | 9 | 10 | 11 |

| CC | Delay 2CC | Delay 1 CC | Delay 0 CC |
|---|---|---|---|
| 0 | | | 1 |
| 1 | | 1 | 2 |
| 2 | 1 | 2 | 0 |
| 3 | 2 | 0 | 3 |
| 4 | 0 | 3 | 4-zg |
| 5 | 3 | 4-zg | 5 |
| 6 | 4-zg | 5 | 0 |
| 7 | 5 | 0 | 6 |
| 8 | 0 | 6 | 7 |
| 9 | 6 | 7 | 8 |
| 10 | 7 | 8 | 9 |
| 11 | 8 | 9 | 10 |
| 12 | 9 | 10 | 11 |

| CC | Delay 2CC | Delay 1 CC | Delay 0 CC |
|---|---|---|---|
| 0 | | | 1 |
| 1 | | 1 | 2 |
| 2 | 1 | 2 | 3 |
| 3 | 2 | 3 | 4-zg |
| 4 | 3 | 4-zg | 5 |
| 5 | 4-zg | 5 | 6 |
| 6 | 5 | 6 | 7 |
| 7 | 6 | 7 | 8 |
| 8 | 7 | 8 | 9 |
| 9 | 8 | 9 | 10 |
| 10 | 9 | 10 | 11 |
| 11 | 10 | 11 | 12 |
| 12 | 11 | 12 | 13 |

# FIG. 23

FIG. 24

EP 4 571 584 A1

2700

FIG. 25

FIG. 26

2700

2910 — determining a zero status bit of a first element that indicates whether the first element is zero

2920 — determining a zero status bit of a second element that indicates whether the second element is zero

2930 — determining at least one combined status bit corresponding to an index of the first element and an index of the second element, wherein the at least one combined status bit indicates whether a product of a next first element and a next second element is non-zero

2940 — determining at least one pointer that points to a memory address of a next set of elements comprising the next first element and the next second element, based on the at least one combined status bit

2950 — retrieving the next set of elements from a location in the at least one memory given by the memory address

2960 — performing a computation to determine the product of the next first element and the next second element

FIG. 27

2800

3010 — receiving as input a sequential bitstream

3020 — determining, using a cache, a distribution of zero-inputs from the sequential bitstream

3030 — determining a zero-input from the distribution of zero-inputs

3040 — determining whether to skip reading the zero-input, or to generate an on-chip zero as a zero-gating zero to replace the zero-input

# FIG. 28

2900

3110 — determining to skip multiply and accumulate computations and memory accesses for combinations of operands that produce zero when multiplied

3120 — maintaining an accumulation value comprising an accumulation of products

3130 — maintaining a positive queue corresponding to products with positive results, and a positive pointer that points to the products with positive results

3140 — maintaining a negative queue corresponding to products with negative results, and a negative pointer that points to the products with negative results

3150 — determining to stop multiply and accumulate computations corresponding to an output once the accumulation value is greater than or equal to a first threshold, remaining products to compute being positive, and the negative pointer pointing to null

3160 — determining to process products from the negative queue to decrease the accumulation value, in response to the accumulation value being greater than or equal to the first threshold and the negative pointer not pointing to null

3170 — determining to stop multiply and accumulate computations corresponding to the output once the accumulation value is less than or equal to a second threshold, remaining products to compute being negative, and the positive pointer pointing to null

3180 — determining to process products from the positive queue to increase the accumulation value, in response to the accumulation value being less than or equal to the second threshold and the positive pointer not pointing to null

FIG. 29

3200

$$Y_+ = \overline{Z_i} \cdot \overline{Z_w} \cdot \overline{(S_i \oplus S_w)}$$

$$Y_- = \overline{Z_i} \cdot \overline{Z_w} \cdot (S_i \oplus S_w)$$

FIG. 30

Europäisches
Patentamt

European
Patent Office

Office européen
des brevets

# EUROPEAN SEARCH REPORT

**Application Number**

EP 23 21 7050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ATOOFIAN EHSAN ED - MCINTOSH-SMITH SIMON ET AL: "PTTS: Power-aware tensor cores using two-sided sparsity", JOURNAL OF PARALLEL AND DISTRIBUTED COMPUTING, ELSEVIER, AMSTERDAM, NL, vol. 173, 21 November 2022 (2022-11-21), pages 70-82, XP087233743, ISSN: 0743-7315, DOI: 10.1016/J.JPDC.2022.11.004 [retrieved on 2022-11-21] | 1-12 | INV. G06N3/063 |
| A | * abstract * * Sections 1, 2, 4.4, and 4.5 * | 13-21 | |
| A | Anonymous: "Lecture 6 - The Memory-Mapped Register", , 15 July 2023 (2023-07-15), pages 1-17, XP093165770, Retrieved from the Internet: URL:https://web.archive.org/web/2023071518 2737/https://schaumont.dyn.wpi.edu/ece4530 f19/lectures/lecture06-notes.html#the-memo ry-mapped-register [retrieved on 2024-05-23] * the whole document * | 1-21 | |
| A | ADITHYA KRISHNA ET AL: "RAMAN: A Re-configurable and Sparse tinyML Accelerator for Inference on Edge", ARXIV.ORG, CORNELL UNIVERSITY LIBRARY, 201 OLIN LIBRARY CORNELL UNIVERSITY ITHACA, NY 14853, 10 June 2023 (2023-06-10), XP091535867, * abstract * * Sections I, II of main paper; and Sections I, and V of supplementary material * | 1-21 | |

TECHNICAL FIELDS
SEARCHED (IPC)

G06N

-/--

The present search report has been drawn up for all claims

| Place of search | Date of completion of the search | Examiner |
|---|---|---|
| The Hague | 18 October 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 23 21 7050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VASIREDDY PRANATHI ET AL: "Streaming Sparse Data on Architectures with Vector Extensions using Near Data Processing", PROCEEDINGS OF THE INTERNATIONAL SYMPOSIUM ON MEMORY SYSTEMS, 2 October 2023 (2023-10-02), pages 1-12, XP093164604, New York, NY, USA ISBN: 979-8-4007-1644-7 Retrieved from the Internet: URL:https://dl.acm.org/doi/pdf/10.1145/3631882.3631898> | 14-18 | |
| A | * Sections 1-3 * | 1-13, 19-21 | |
| A | Anonymous: "Memory-mapped I/O and port-mapped I/O - Wikipedia", , 4 December 2023 (2023-12-04), pages 1-6, XP093214107, Retrieved from the Internet: URL:https://en.wikipedia.org/w/index.php?title=Memory-mapped_I/O_and_port-mapped_I/O&oldid=1188347486 * Paragraph: "Memory-mapped I/O"; page 1 - page 1 * | 1-21 | TECHNICAL FIELDS SEARCHED (IPC) |
| A | US 2018/189056 A1 (TURAKHIA YATISH GIRISH [US] ET AL) 5 July 2018 (2018-07-05) * paragraphs [0039], [0047] - [0057], [0060] - [0070]; figures 3, 5 * | 1-21 | |

-/--

The present search report has been drawn up for all claims

| Place of search | Date of completion of the search | Examiner |
|---|---|---|
| The Hague | 18 October 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 23 21 7050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KANG SANGHOON ET AL: "An Overview of Sparsity Exploitation in CNNs for On-Device Intelligence With Software-Hardware Cross-Layer Optimizations", IEEE JOURNAL ON EMERGING AND SELECTED TOPICS IN CIRCUITS AND SYSTEMS, IEEE, PISCATAWAY, NJ, USA, vol. 11, no. 4, 15 October 2021 (2021-10-15), pages 634-648, XP011893650, ISSN: 2156-3357, DOI: 10.1109/JETCAS.2021.3120417 [retrieved on 2021-12-10] * the whole document * ----- | 1-21 | |
| | | | TECHNICAL FIELDS SEARCHED (IPC) |

The present search report has been drawn up for all claims

| Place of search | Date of completion of the search | Examiner |
|---|---|---|
| The Hague | 18 October 2024 | Mariani, Giovanni |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

**Application Number**

EP 23 21 7050

The Search Division considers that the present European patent application does not comply with the requirements of unity of invention and relates to several inventions or groups of inventions, namely:

1. claims: 1-13, 19-21

   Architecture for sparse computation
   - - -

2. claims: 14-18

   Architecture for sparse memory access
   - - -

## ANNEX TO THE EUROPEAN SEARCH REPORT
## ON EUROPEAN PATENT APPLICATION NO.

EP 23 21 7050

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2024

| Patent document cited in search report | Publication date | Patent family member(s) | | Publication date |
|---|---|---|---|---|
| US 2018189056 A1 | 05-07-2018 | CN | 110121721 A | 13-08-2019 |
| | | TW | 201824095 A | 01-07-2018 |
| | | US | 2018189056 A1 | 05-07-2018 |
| | | WO | 2018125429 A1 | 05-07-2018 |

EPO FORM P0459

For more details about this annex : see Official Journal of the European Patent Office, No. 12/82